# EUROPEAN PATENT SPECIFICATION

(11) **EP 4 505 838 B1**
(45) Date of publication and mention of the grant of the patent: **04.03.2026**
(21) Application number: 23716866.1
(22) Date of filing: 04.04.2023
(51) Int. Cl.: H04W 76/28, H04W 52/02, H04W 76/14, H04W 76/27, H04W 92/18, H04L 1/1829, H04L 5/00, H04W 88/06, H04L 1/00

(54) **METHODS, APPARATUSES, COMPUTER PROGRAM PRODUCT AND COMPUTER READABLE MEDIUM FOR CONTROLLING OPERATING STATES OF A FIRST COMMUNICATION INTERFACE THROUGH MEDIATION VIA A SECOND COMMUNICATION INTERFACE**
VERFAHREN, VORRICHTUNGEN, COMPUTERPROGRAMMPRODUKT UND COMPUTERLESBARES MEDIUM ZUR STEUERUNG VON BETRIEBSZUSTÄNDEN EINER ERSTEN KOMMUNIKATIONSSCHNITTSTELLE DURCH VERMITTLUNG ÜBER EINE ZWEITE KOMMUNIKATIONSSCHNITTSTELLE
PROCÉDÉ, APPAREIL, PRODUIT PROGRAMME D'ORDINATEUR ET SUPPORT LISIBLE PAR ORDINATEUR POUR CONTRÔLER LES ÉTATS DE FONCTIONNEMENT D'UNE PREMIÈRE INTERFACE DE COMMUNICATION

(30) Priority: 05.04.2022 DE 102022203383
(43) Date of publication of application: 12.02.2025
(73) Proprietor: AUMOVIO Germany GmbH, 60488 Frankfurt am Main (DE)
(72) Inventor: GONZALEZ GONZALEZ, David, 30175 Hannover (DE); SHAH, Rikin, 30175 Hannover (DE); GONSA, Osvaldo, 30175 Hannover (DE)
(74) Representative: Aumovio Corporation
(86) International application number: PCT/EP2023/058778
(87) International publication number: WO 2023/194351

(56) References cited:
- WO-A1-2020/224898
- WO-A1-2020/225031
- WO-A1-2021/098100
- WO-A1-2022/028390
- OPPO: "Discussion on DRX for sidelink", vol. RAN WG2, no. E-meeting; 20201101, 23 October 2020 (2020-10-23), XP051941878, Retrieved from the Internet <URL:https://ftp.3gpp.org/tsg_ran/WG2_RL2/TSGR2_112-e/Docs/R2-2008772.zip R2-2008772 - Discussion on DRX for sidelink.docx> [retrieved on 20201023]

## Description

### FIELD

The present invention relates to discontinuous reception, also referred to as DRX, in wirelessly connected equipment, in particular in connection with sidelink communications as found, e.g., in Cellular-Vehicle-to-Everything (C-V2X) communication.

### BACKGROUND

In today's connected world many devices are connected to other devices or systems through wireless connections. Such devices may include portable or mobile devices, sensors, and even motor vehicles. Very often, such devices not only communicate with each other through a wireless network infrastructure such as the well-known 3G, 4G, 5G and future communication networks, but also directly, i.e., device-to-device, or D2D, typically across short distances, depending on the standard also dubbed direct short-range communication, or DSRC, e.g., in the IEEE802.11p standard. The direct communication amongst devices foregoing the communication network infrastructure is also referred to as sidelink communication, while the communication through wireless network infrastructure is typically referred to as uplink or downlink. Throughout this specification the direct device-to-device communication, or D2D, may be referred to under any of the aforementioned names or abbreviations irrespective of the underlying standard or protocol, unless it is clear from the context that a specific implementation is meant.

WO 2022/028390 A1 discloses a method for supporting Sidelink (SL) Discontinuous Reception (DRX) operation. A User Equipment (UE) maintains SL DRX configuration which includes one of a transmission pattern and a reception pattern that the UE expects to perform transmission and reception to a peer UE. The UE exchanges the SL DRX configuration with the peer UE. Based on the exchange of the SL DRX configuration, the UE determines when to perform transmission or reception to or from the peer UE during an SL DRX operation. Based on the determination, the UE performs transmission or reception to or from the peer UE during the SL DRX operation.

WO 2021/098100 A1 discloses methods and devices for wireless communication resource configuration. Various schemes of configuration of sidelink control resources and/or sidelink data communication resources enable reduction of time duration that a user equipment is required to monitor sidelink communication resources for sidelink data, thereby providing power saving in sidelink communication.

WO 2020/225031 A1 discloses methods for selective transmission of wake-up signals (WUS) to a user equipment (UE) by a network node in a RAN. The methods include transmitting a WUS to the UE during a first occasion and, during one or more second occasions, monitoring for WUS feedback from the UE in response to the WUS. Such methods include, based on the results of the monitoring, selectively transmitting one or more further WUS to the UE during respective one or more third occasions. The WUS feedback can be received in various ways in different embodiments. In some embodiments, such methods include other operations after a predetermined number of repetitions of detecting no WUS feedback from the UE during second occasions and transmitting further WUS to the UE during third occasions. Other embodiments include complementary methods for a UE, as well as network nodes and UEs configured to perform such methods.

WO 2020/224898 A1 discloses a method and wireless device for autonomous WD wake up are disclosed. According to one embodiment, a wireless device configured to communicate with a network node is provided. The wireless device includes processing circuitry configured to determine that a transmitted wake up signal has been missed before a discontinuous reception (DRX) ON-duration, and perform at least one action during the DRX ON-duration based at least in part on the determination that the wake signal has been missed.

D5 OPPO: "Discussion on DRX for sidelink", 3GPP DRAFT; R2-2008772, 2020-10-23, XP051941878, this paper presents a discussion on the DRX for sidelink. Sidelink DRX for broadcast, groupcast, and unicast [RAN2] defines on- and off-durations in sidelink and specify the corresponding UE procedure and specifies mechanism aiming to align sidelink DRX wake-up time among the UEs communicating with each other. Specify mechanism aiming to align sidelink DRX wake-up time with Uu DRX wake-up time in an in-coverage UE are presented.

In particular in C-V2X communication, sidelink communication is extensively used in addition to using the up- or downlink connection to the wireless network. This not only reduces the traffic load on the network infrastructure, which invariably causes non-negligible overhead for connection management irrespective of the amount of data transmitted, but also permits faster and more energy-efficient exchange of data between two or more wireless devices. In addition, direct communication permits using higher frequencies, which offer higher data rates. In vehicle-to-vehicle (V2V), vehicle-to-infrastructure (V2I) and vehicle-to-pedestrian (V2P) communication, sidelink communication may preferably be used for short-range communication, e.g., for transmitting information or data that may be of imminent importance to a user, including but not limited to location and speed of a nearby vehicle or pedestrian. Vehicle-to-network (V2N) communication, on the other hand, may be used for transmitting information than may not be of imminent importance to a user, e.g., information about a traffic incident or difficult road conditions some distance ahead. In this context, a user may be a person or a device, e.g., a vehicle providing advanced driving assistance or even driving autonomously.

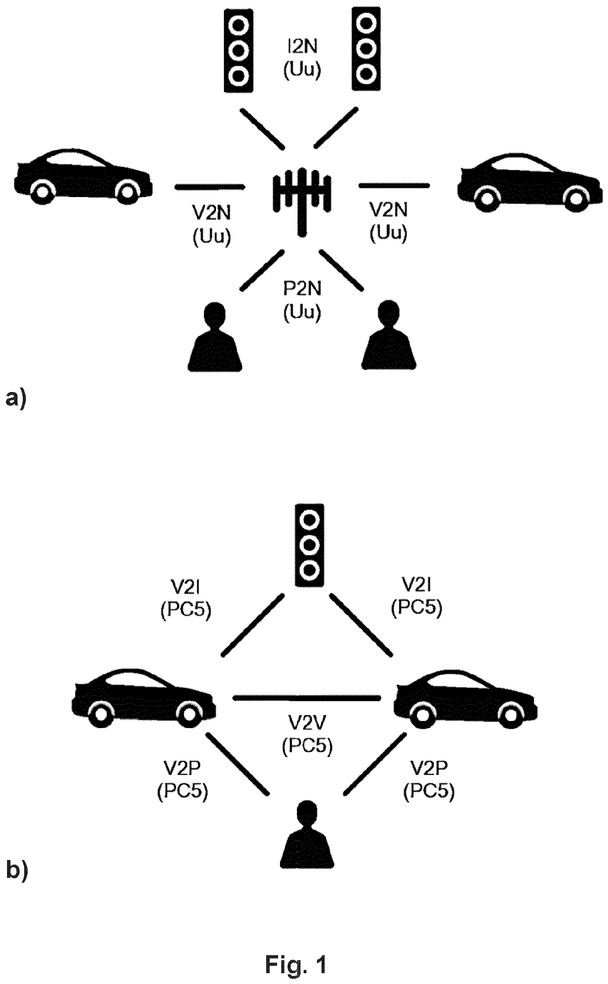

Figure 1 a) and b) illustrate various communication paths between infrastructure devices, vehicles and personal communication devices using a wireless network infrastructure and sidelink communication. Figure 1 a) shows the exclusive use of a network infrastructure, represented by an antenna symbol. The infrastructure devices, represented by a traffic light symbol, uses, e.g., a 5G network air interface (Uu) for its infrastructure-to-network communication (I2N). Likewise, vehicles and persons - through their mobile communication devices - use the 5G network air interface for their respective vehicle-to-network (V2N) and person-to-network (P2N) communication. Figure 1 b) shows the exclusive use of sidelink communication, i.e., communication bypassing the network infrastructure, represented by the direct links between the participants. It is easy to imagine that, depending on local conditions and requirements, one of the communication channels can be used optionally.

Sidelink communication may use DRX in order to reduce energy consumption, which is of significant importance in particular in battery-powered devices. DRX is a power saving mechanism, in which ON and OFF periods are defined, mainly at the receiver side. During OFF periods, the device's components required for wireless connectivity enter a sleep mode, e.g., turn off an RF modem, a baseband receiver and the like, which results in significantly reduced power consumption. As such, DRX also has an effect on potential transmitters, or it should at least be considered having such effect, for efficient operation, as a targeted receiver cannot receive during OFF periods.

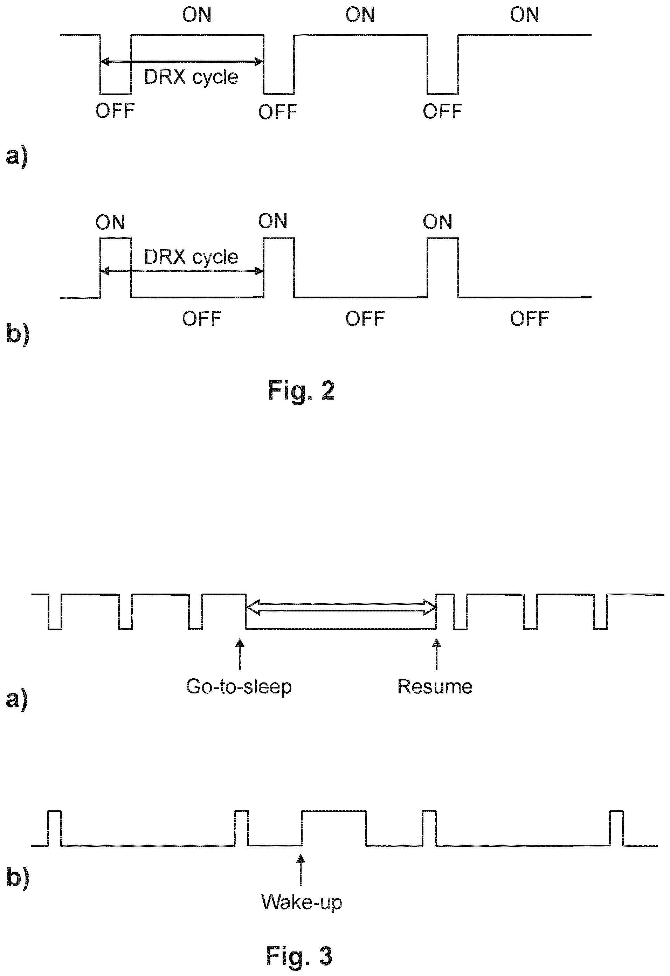

Depending on the ratio of the duration of ON and OFF time periods, i.e., the duty cycle, more or less energy can be saved, as is illustrated in figure 2 a) and b). Figure 2 a) shows a comparatively long ON period during each DRX cycle, which permits receiving transmissions during a longer time period, but results in lower energy saving. Figure 2 b) shows a comparatively short ON period during each DRX cycle, which results in higher energy saving but permits receiving transmissions during a shorter time period only.

It is readily apparent that, in order for sidelink communication using DRX to effectively transport information from the transmitter to the receiver, the ON time periods of a receiver need to be synchronised with the time a transmitter actively transmits. In addition to synchronised DRX duty cycles, further energy savings can be achieved using so-called Go-to-Sleep and *Wake-Up* messages, through which transmitters and receivers may stipulate ON or OFF periods extending over time periods covering multiple DRX duty cycles. During extended ON or OFF periods the DRX synchronisation is maintained, i.e., the schedule for activating and deactivating the receiver after the extended ON or OFF period has expired will remain synchronized with that of the transmitter.

Figure 3 a) shows an exemplary configuration for increased energy saving by using an extended OFF period spanning several DRX duty cycles. The extended OFF period is controlled using control messages for putting the receivers into an OFF state at predetermined time instants, either absolute or with reference to a DRX cycle. Here, a Go-to-sleep message may be issued at some point during an ON state, instructing the receivers to assume an OFF state at a certain point in time. A control command also specifies when the receiver is to assume an ON state again. This can be specified as an absolute point in time, in particular when all receivers have accurate and synchronized clocks, or as a number of DRX cycles to skip before assuming the ON state, in accordance with the original DRX duty cycle and synchronisation. At the end of the extended OFF period, the original DRX duty cycle is resumed, indicated by the remainder of a DRX ON period being executed prior to entering the brief DRX OFF period, and continuing "normal" DRX duty cycles.

The Go-to-Sleep and *Wake-Up* messages may also be used in DRX duty cycle schemes having long OFF periods, for enabling intermediate reception during an OFF period. This may result in even further increased energy saving while keeping the operation of sidelink communication agile, as is illustrated in figure 3 b). Figure 3 b) shows a configuration for flexibly receiving low-latency and/or critical transmissions during a DRX cycle configured for high energy saving. Here, a *Wake-up* message defines the instant when the receiver is to assume an ON state, even when the DRX duty cycle would put the receiver into an OFF state. The *Wake-up* message may also specify for how long the receiver is to remain in ON state before resuming the previously configured DRX cycle, i.e., assuming whichever state is configured for the time after the ON time specified in the *Wake-up* message has expired. The original DRX duty cycle remains unchanged.

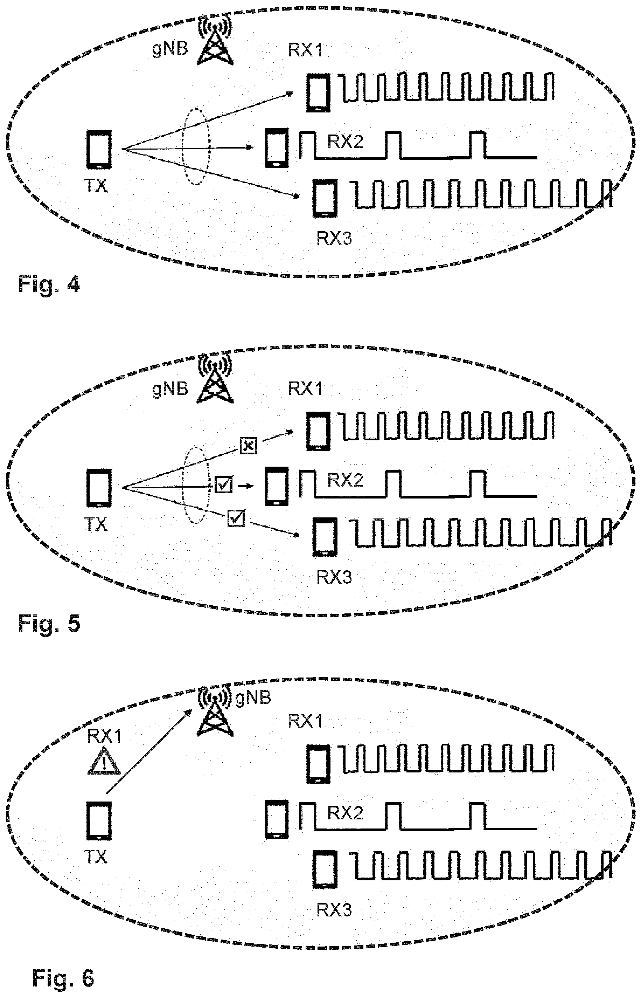

Evidently, Go-to-Sleep and *Wake-Up* messages for stipulating the ON and OFF time periods amongst any number of devices can only be received during ON time periods or through dedicated independent channels, and the problem remains that there still may be situations in which these DRX-related commands do not reach all users, or in which the operation of the sidelink interface turns out to be much less efficient than possible. Such situation can, e.g., occur, when devices within a transmitter's radio range have different or non-aligned DRX configurations, which can occur, e.g., when a device that was previously configured to a different transmitter enters the radio range of a new transmitter, whose "DRX group" is differently configured. Three receiver devices RX1, RX2 and RX3 with different DRX configurations, indicated by the respective ON/OFF-states, within the radio range of a transmitter device TX are shown in figure 4. A base station gNB of a radio access network is also within radio range of the transmitter device TX. The receivers RX2 and RX3 have at least some coinciding ON states, while the receiver RX1 is never in an ON state when any of the other receivers is in an ON state. In figure 4 the transmitter TX intends to transmit to three receivers RX1, RX2 and RX3 that are located within the radio range of transmitter TX, indicated by the dashed oval. However, each of the receivers RX1, RX2 and RX3 has an individual DRX cycle, represented by the different ON/OFF timelines, and, as illustrated in figure 4, receiver RX1 is never in an ON state when any of the other receivers is in an ON state. In such situation, it will be very difficult for the transmitter TX to reach all receivers RX1, RX2 and RX3 within a reasonable time and without having to repeat the transmission many times, hoping to eventually deliver the message to all receivers RX1, RX2 and RX3, if that is possible at all. This will unavoidably need sending multiple messages, and in the worst case sending as many messages as there are receivers, or even more. In addition, repeating the transmission will require a significant amount of energy at the transmitter TX. While it may be possible to use a groupcast, such groupcast requires maintenance of the group and, in many scenarios, groupcasts do not provide feedback. However, even with feedback, groupcast is less-reliable than unicast, as the transmission is not optimized.

In general, a transmitter will only have knowledge about poor coverage in terms of reached receivers based on signal quality indications or feedback. Thus, loss of messages is possible, including DRX control messages such as *Go-to-Sleep*, which negatively affects energy saving opportunities in the receivers.

### SUMMARY OF THE INVENTION

There is, thus, a need for providing more reliability to DRX-related signalling and commands, including, in particular, Go-to-Sleep and *Wake-Up.*

This object is achieved by the methods of independent claims 1, 8 and 12 and the apparatus of independent claims 5, 10 and 15. Advantageous embodiments and developments are provided in the respective dependent claims.

In accordance with a first aspect of the invention a method of operating a first communication apparatus for controlling electronic components of one or more second communication apparatus is provided. The first communication apparatus is configured to establish, maintain, and terminate a first wireless communication connection with a base station of a radio access network (RAN) and is further configured to establish, maintain, and terminate second, direct wireless communication connections with the one or more second communication apparatus.

The radio access network may include a network in accordance with the 3GPP technical specification TS 38.300-family, also referred to as 5G NR, and further developments thereof, e.g., the future 6G standard, in which a plurality of communication apparatus connects or attaches to the radio access network through one of a plurality of base stations. In 5G NR networks, the first communication connection is also referred to under the abbreviation Uu, which may be used in this specification without meaning to limit the scope of the appended claims to 5G NR use cases. 3GPP, for 3rd Generation Partnership Project, is an umbrella term for a number of standards organizations which develop protocols for mobile telecommunications.

The second, direct wireless communication connections may include so-called "sidelink" communication connections, which refers to direct communication between terminal nodes or user equipment without data going through a radio access network infrastructure the terminal nodes or user equipment is also logically attached to. In 5G NR networks, the second communication connection is also referred to under the abbreviation PC5, which may be used in this specification without meaning to limit the appended claims to 5G NR use cases. Thus, it is also conceivable that the sidelink communication is effected through wireless LAN connections according to standards of the IEEE802.11-family, or through Bluetooth connections.

The first and the second wireless communication connection may at least temporarily exist or be active at the same time, i.e., they may be independent from each other. This may include physically separate receivers and transmitters for each communication connection.

The electronic components controlled by executing the method may, in particular, be required, in the one or more second communication apparatus, for receiving wireless transmissions over the second communication connection. The electronic components may, thus, be part of or form a receiver including, inter alia, a radio frequency modem, a baseband receiver, and the like.

The first communication apparatus is further configured to transmit, via the second communication connection, control information items for scheduling operation of the electronic components, required for receiving wireless transmissions over the second communication connection, in the one or more second communication apparatus in a first or a second operating mode, respectively.

In the first operating mode, which may be dubbed ON-mode, the electronic components of the one or more second communication apparatus are powered and operative, enabling reception of wireless transmissions over the second communication connection. In the second operating mode, which may be dubbed OFF-, sleep- or energy saving-mode, the electronic components of the one or more second communication apparatus are not powered or are put in a low-power mode and are not operative, and consequently wireless transmissions cannot be received over the second communication connection.

In accordance with the first aspect of the invention the method comprises determining, if one or more second communication apparatus did not receive one or more control information items previously transmitted via the second communication channel. In the positive case, i.e., when one or more second communication apparatus did not receive one or more control information items previously transmitted via the second communication channel, it may be assumed that the first and second operating modes of the corresponding second communication apparatus are not synchronized or at least not sufficiently overlapping with the first and second operating mode as controlled or instructed by the first communication apparatus. Thus, in the positive case, the method includes transmitting a corresponding indication, via the first communication connection, to the base station of the radio access network. In a basic embodiment, the indication may simply comprise an information that a second communication connection between the first communication apparatus and one or more second communication apparatus is compromised or lost.

This very basic information would allow a base station of the radio access network to instruct all first and second communication apparatus attached thereto to enter the first operating mode, i.e., ON-mode, and instruct them to use a sidelink communication channel with specified parameters. The first communication apparatus can then take over and transmit control information items for synchronising the operation of the second communication apparatus in first and second operating modes, respectively, for future transmissions.

When an identification of the one or more second communication apparatus is comprised in the indication from the first communication apparatus to the base station of the radio access network, a more specific action from the base station is possible, e.g., instructing only those second communication apparatus identified in the indication to enter the first operating mode, i.e., ON-mode, at a certain point in time and instruct them to use a sidelink communication channel with specified parameters.

In one or more embodiments of the method determining, if one or more second communication apparatus did not receive one or more control information items previously transmitted via the second communication channel, comprises measuring and evaluating a signal quality of the second communication connection and/or evaluating hybrid automatic repeat request (HARQ) feedback on the second communication connection.

In one or more embodiments of the method the indication transmitted via the first communication connection to the base station of the radio access network comprises control information items enabling synchronising the operation of electronic components, required for receiving wireless transmissions over the second communication connection, in the one or more second communication apparatus which did not receive one or more control information items previously transmitted via the second communication channel, in the first and the second operating modes, respectively. Such control information items enabling synchronising may include a DRX cycle timing. Alternatively, or in addition, the control information items may include information for activating and deactivating, respectively, individual carriers used for communicating via the second communication connection, in response to received control information items.

The indication and/or the control information items may be transmitted in the media access control (MAC) sublayer of the first wireless communication connection, e.g., in a MAC control element (MAC CE). The MAC CE is transmitted through configured grant (CG) or dynamic grant resources. The control information items may alternatively be transmitted in a physical control channel of the first wireless communication connection, e.g., in a Downlink Control Information (DCI) message.

The MAC sublayer serves for organising the communication channel and operates, inter alia, on the downlink shared channel (DL-SCH) and uplink shared channel (UL-SCH) of 5G networks. Similar sublayers are found in 4G networks and will be present in future networks. In 5G the MAC sublayer comprises MAC protocol data units (PDUs). A MAC PDU is a bit string that is byte aligned, i.e., multiple of 8 bits in length, and that consists of one or more of the following MAC subPDUs:
- A MAC subheader only, including padding;
- A MAC subheader and a MAC SDU, i.e., a MAC service data unit;
- A MAC subheader and a MAC CE;
- A MAC subheader and padding.

The MAC subheader for the for DL-SCH and UL-SCH consists of the following fields:
- LCID: The Logical Channel ID field identifies the logical channel instance of the corresponding MAC SDU or the type of the corresponding MAC CE or padding. An example of the LCID for the DL-SCH is shown below. There is one LCID field per MAC subheader. The LCID field size is 6 bits;
- L: The Length field indicates the length of the corresponding MAC SDU or variable-sized MAC CE in bytes. There is one L field per MAC subheader except for subheaders corresponding to fixed-sized MAC CEs, padding, and MAC SDUs containing UL CCCH. The size of the L field is indicated by the F field;
- F: The Format field indicates the size of the Length field. There is one F field per MAC subheader except for subheaders corresponding to fixed-sized MAC CEs, padding, and MAC SDUs containing UL CCCH. The size of the F field is 1 bit. The value 0 indicates 8 bits of the Length field. The value 1 indicates 16 bits of the Length field;
- R: Reserved bit, set to zero.

Amongst the available fields the logical channel ID field (LCID) is a good candidate for transmitting control information items for scheduling operation of electronic components in accordance with a DRX regime. Table 6.2.1-1 from ETSI TS 138 321 V15.3.0 (2018-09) shows the values of LCID for DL-SCH:

| **Index** | **LCID values** |
|---|---|
| 0 | CCCH |
| 1-32 | Identity of the logical channel |
| 33-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS / CSI-IM Resource Set Activation/Deactivation |
| 56 | Duplication Activation/Deactivation |
| 57 | SCell Activation/Deactivation (four octet) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

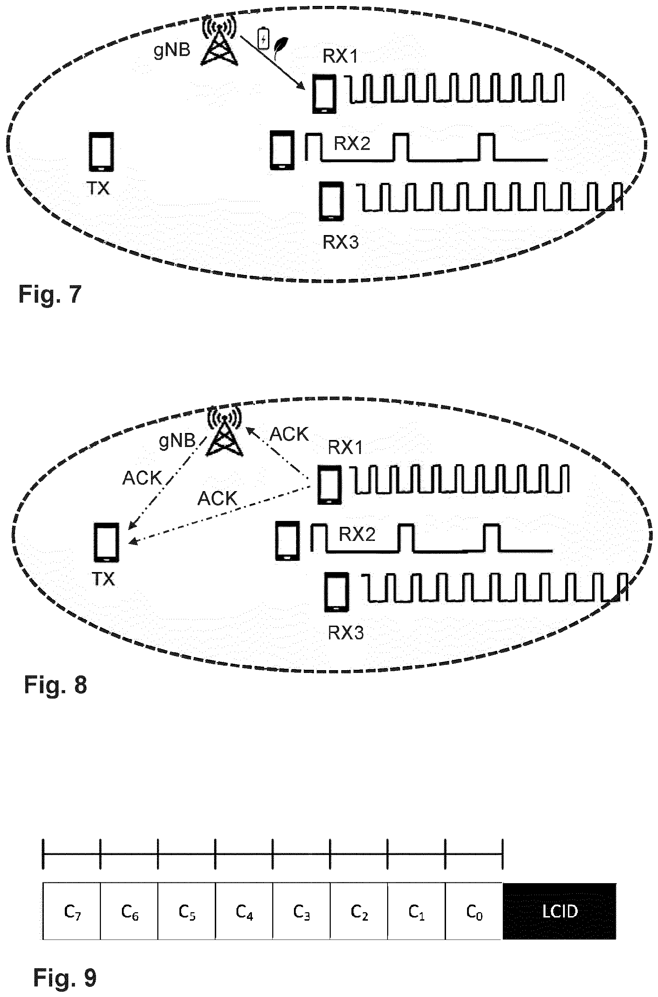

Indices 33-46 are reserved, i.e., are currently not used. Each LCID index is associated with a corresponding byte, as shown in figure 8. Any bit C₀ to C₇ within the corresponding byte of any of these reserved indices within the MAC subheader may be set to 1, indicating that Go-to-sleep for the second wireless communication connection, i.e., the sidelink communication connection, shall be activated in the receiving device. Accordingly, the chosen bit may be set to 0, indicating that *Go-to-*sleep for the second wireless communication connection shall be deactivated in the receiving device.

Alternatively, or additionally, any bit C₀ to C₇ within the corresponding byte of any of these reserved indices within the MAC subheader may be set to 1, indicating that data transmission for a specific carrier of the second wireless communication connection, i.e., the sidelink communication connection, shall be activated in the receiving device. Accordingly, the chosen bit may be set to 0, indicating that data transmission for a specific carrier the second wireless communication connection shall be deactivated in the receiving device. This embodiment may inter alia be used in second communication connections using carrier aggregation of up to 8 carriers, for activating or deactivating individual carriers. The bits C₀ to C₇ within the byte represent a status bit map for the carriers.

Note that one or more of the reserved octets may be used if required.

If more carriers can be aggregated, e.g., 16 carriers, four bits of an octet may indicate a specific carrier, while any one of the other four bits may indicate whether to activate or deactivate the carrier. Four bits of an exemplary octet for switching off the second carrier could look like 0010, i.e., representing the channel number in binary format, and a fifth bit could be set to 0, indicating the action to be taken. Four bits for switching on the third carrier could look like 0011, and the fifth bit would be set to 1. This method could be used if spare bits or bytes in existing protocols are scarce, e.g., in a DCI message transmitted in a control channel for physical layer signalling, and it may even be conceivable to transmit the five bits sequentially in subsequent messages or commands.

In accordance with a second aspect of the invention a first communication apparatus adapted to execute the method in accordance with the first aspect of the invention is configured to establish, maintain and terminate a first wireless communication connection with a base station of a radio access network, and to establish, maintain and terminate second, direct wireless communication connections with one or more second communication apparatus. The second apparatus may be of the same or a similar kind as the first communication apparatus, i.e., capable of establishing a first and a second wireless connection like the first communication apparatus.

The radio access network may include a network in accordance with the 3GPP technical specification TS 38.300-family, also referred to as 5G NR, and further developments thereof, e.g., the future 6G standard, in which a plurality of communication apparatus connects or attaches to the radio access network through one of a plurality of base stations. In 5G NR networks, the first communication connection is also referred to under the abbreviation Uu, which may be used in this specification without meaning to limit the scope of the appended claims to 5G NR use cases.

The second, direct wireless communication connections may include so-called "sidelink" communication connections, which refers to direct communication between terminal nodes or user equipment without data going through a radio access network infrastructure the terminal nodes or user equipment is also logically attached to. In 5G NR networks, the second communication connection is also referred to under the abbreviation PC5, which may be used in this specification without meaning to limit the appended claims to 5G NR use cases. Thus, it is also conceivable that the sidelink communication is effected through wireless LAN connections according to standards of the IEEE802.11-family, or through Bluetooth connections.

The first and the second wireless communication connection may at least temporarily exist or be active at the same time, i.e., they may be independent from each other. This may include physically separate receivers and transmitters for each communication connection.

The first communication apparatus is further configured to transmit, via the second communication connection, control information items for scheduling operation of electronic components, required for receiving wireless transmissions over the second communication connection, in one or more second communication apparatus in a first or a second operating mode, respectively. The electronic components may comprise, inter alia, electronic components of a wireless transmitter, a wireless receiver, and/or a power management circuit.

In the first operating mode, which may be dubbed ON-mode, the electronic components, required for receiving wireless transmissions over the second communication connection, of the one or more second communication apparatus are powered and operative to receive wireless transmissions over the second communication connection. In the second operating mode, which may be dubbed OFF-, sleep- or energy saving-mode, the electronic components, required for receiving wireless transmissions over the second communication connection, of the one or more second communication apparatus are not powered or are put in a low-power mode and are not operative to receive wireless transmissions over the second communication connection.

In accordance with the second aspect of the invention the first communication apparatus is further configured to determine, if one or more second communication apparatus did not receive one or more control information items previously transmitted via the second communication channel. In the positive case, i.e., when it has been determined that one or more second communication apparatus did not receive one or more control information items previously transmitted via the second communication channel, it may be assumed that the first and second operating modes of the corresponding second communication apparatus are not synchronized or at least sufficiently overlapping with the first and second operating mode as controlled by the first communication apparatus. Thus, in the positive case, the first communication apparatus is further configured to transmit a corresponding indication, via the first communication connection, to the base station of the radio access network.

In one or more embodiments the first communication apparatus is configured, for determining if one or more second communication apparatus did not receive one or more control information items previously transmitted via the second communication channel, to measure and evaluate a signal quality of the second communication connection and/or to evaluate hybrid automatic repeat request feedback on the second communication connection.

In one or more embodiments the first communication apparatus is configured to transmit, via the first communication connection to the base station of the radio access network and along with the indication, control information items for synchronising the operation of electronic components, required for receiving wireless transmissions over the second communication connection, in the second communication apparatus which did not receive one or more control information items previously transmitted via the second communication channel, in the first and the second operating modes, respectively. The control information items enabling synchronising may include a DRX cycle timing. Alternatively, or in addition, the control information items may include information for activating and deactivating, respectively, individual carriers used for communicating via the second communication connection, in response to received control information items.

In accordance with a third aspect of the invention a method of operating a second communication apparatus, which is configured to establish, maintain and terminate a first wireless communication connection with a base station of a radio access network and which is further configured to establish, maintain and terminate a second, direct wireless communication connection with a first communication apparatus, comprises receiving, at the second communication apparatus and via the second communication connection, control information items for scheduling operation of electronic components, required for receiving wireless transmissions over the second communication connection, in a first or a second operating mode, respectively.

The radio access network may include a network in accordance with the 3GPP technical specification TS 38.300-family, also referred to as 5G NR, and further developments thereof, e.g., the future 6G standard, in which a plurality of communication apparatus connects or attaches to the radio access network through one of a plurality of base stations. In 5G NR networks, the first communication connection is also referred to under the abbreviation Uu, which may be used in this specification without meaning to limit the scope of the appended claims to 5G NR use cases.

The second, direct wireless communication connections may include so-called "sidelink" communication connections, which refers to direct communication between terminal nodes or user equipment without data going through a radio access network infrastructure the terminal nodes or user equipment is also logically attached to. In 5G NR networks, the second communication connection is also referred to under the abbreviation PC5, which may be used in this specification without meaning to limit the appended claims to 5G NR use cases. Thus, it is also conceivable that the sidelink communication is established through wireless LAN connections according to standards of the IEEE802.11-family, or through Bluetooth connections.

The first and the second wireless communication connection may at least temporarily exist or be active at the same time, i.e., they may be independent from each other. This may include physically separate receivers and transmitters for each communication connection.

In the first operating mode, which may be dubbed ON-mode, the electronic components of the second communication apparatus are powered and operative to receive wireless transmissions over the second communication connection. In the second operating mode, which may be dubbed OFF-, sleep- or energy saving-mode, the electronic components of the second communication apparatus are not powered or are put in a low-power mode and are not operative to receive wireless transmissions over the second communication connection.

In accordance with the third aspect of the invention the method comprises receiving, via the first communication connection, and from a base station of the radio access network, the control information items for scheduling operation of the electronic components, required for receiving wireless transmissions over the second communication connection, in the first or the second operating mode, respectively. The control information items received via the first communication connection override control information items previously received via the second communication connection.

The control information items may be received in the media access control (MAC) sublayer of the first wireless communication connection or in a physical control channel.

In accordance with a fourth aspect of the invention a second communication apparatus adapted to execute the method in accordance with the third aspect of the invention is configured to establish, maintain and terminate a first wireless communication connection with a base station of a radio access network, and to establish, maintain and terminate a second, direct wireless communication connections with a first communication apparatus. The second apparatus may be of the same or a similar kind as the first communication apparatus, i.e., capable of establishing a first and a second wireless connection like the first communication apparatus.

The radio access network may include a network in accordance with the 3GPP technical specification TS 38.300-family, also referred to as 5G NR, and further developments thereof, e.g., the future 6G standard, in which a plurality of communication apparatus connects or attaches to the radio access network through one of a plurality of base stations. In 5G NR networks, the first communication connection is also referred to under the abbreviation Uu, which may be used in this specification without meaning to limit the scope of the appended claims to 5G NR use cases.

The second, direct wireless communication connections may include so-called "sidelink" communication connections, which refers to direct communication between terminal nodes or user equipment without data going through a radio access network infrastructure the terminal nodes or user equipment is also logically attached to. In 5G NR networks, the second communication connection is also referred to under the abbreviation PC5, which may be used in this specification without meaning to limit the appended claims to 5G NR use cases. Thus, it is also conceivable that the sidelink communication is established wireless LAN connections according to standards of the IEEE802.11-family, or through Bluetooth connections.

The first and the second wireless communication connection may at least temporarily exist or be active at the same time, i.e., they may be independent from each other.

This may include physically separate receivers and transmitters for each communication connection.

The second communication apparatus is further configured to receive, via the second communication connection, control information items for scheduling operation of electronic components, required for receiving wireless transmissions over the second communication connection, in a first or a second operating mode, respectively.

In the first operating mode, which may be dubbed ON-mode, the electronic components, required for receiving wireless transmissions over the second communication connection, of the second communication apparatus are powered and operative to receive wireless transmissions over the second communication connection. In the second operating mode, which may be dubbed OFF-, sleep- or energy saving-mode, the electronic components, required for receiving wireless transmissions over the second communication connection, of the one or more second communication apparatus are not powered or are put in a low-power mode and are not operative to receive wireless transmissions over the second communication connection.

In accordance with the fourth aspect of the invention the second communication apparatus is further configured to receive, via the first communication connection, and from a base station of the radio access network, the control information items for scheduling operation of the electronic components, required for receiving wireless transmissions over the second communication connection, in the first or the second operating mode, respectively. The second communication apparatus is further configured to override control information items previously received via the second communication connection with the control information items received via the first communication connection.

In one or more embodiments the second communication apparatus in accordance with the fourth aspect of the invention is configured to activate and deactivate, respectively, individual carriers used for communicating via the second communication connection, in response to received control information items.

In accordance with a fifth aspect of the invention a method of operating a base station of a radio access network, which is configured to establish, maintain and terminate first wireless communication connections with a first and a second communication apparatus in accordance with the first and the second aspect of the invention, respectively, comprises receiving, from a first communication apparatus and via the first wireless communication connection, an indication representing an information that a second communication connection between the first communication apparatus and one or more second communication apparatus is compromised or lost. The base station will then transmit, via the first communication connection and to one or more second communication apparatus, control information items for scheduling the operation of electronic components, required for receiving wireless transmissions from the first communication apparatus over the second communication connection, in the first and the second operating modes, respectively.

In one or more embodiments the method in accordance with the fifth aspect of the invention comprises establishing and maintaining a correspondence between identifiers used in first and second communication apparatus for communicating via the first communication connection and identifiers used in first and second communication apparatus for communicating via the second communication connection. This may help the base station to identify and contact those second communication apparatus that cannot be reached by the first communication apparatus. The correspondence may be established at the time a communication apparatus registers with or attaches to a base station of the radio access network. At this occasion, the base station may configure an identity for each communication device for use in the second communication connection, which the second communication devices make known to each other in the initial interactions over the second communication connection.

In one or more embodiments the method in accordance with the fifth aspect of the invention the control information items comprise an identification of one or more carriers in the second communication connection, which are to be activated or deactivated.

In accordance with a sixth aspect of the invention a base station of a radio access network comprises one or more microprocessors, volatile and non-volatile memory, and receiver and transmitter means, which are communicatively connected via at least one data connection or bus. The non-volatile memory comprises computer program instructions which, when executed by the one or more microprocessors control the receiver and transmitter means to establish, maintain and terminate first communication connections with one or more first and second communication apparatus in accordance with the second and fourth aspect of the invention, respectively. The non-volatile memory further stores computer program instructions which, when executed by the one or more microprocessors, configure the base station to implement and execute the method of the fifth aspect of the invention. The first wireless communication connection may include, inter alia, a connection in accordance with 3GPP 5G and/or 6G standards.

In accordance with a seventh aspect of the invention a method of enabling communication between a first communication apparatus in accordance with the second aspect of the invention and one or more second communication apparatus in accordance with the fourth aspect of the invention, via a second communication connection is presented. The first communication apparatus and the one or more second communication apparatus are further configured to communicate with a base station of a radio access network via a first communication connection. The method comprises determining, in the first communication apparatus, if one or more second communication apparatus did not receive one or more control information items previously transmitted via the second communication connection. In the positive case, the method comprises transmitting a corresponding indication, via the first communication connection, to the base station of the radio access network. The base station, via the first communication connection and from the first communication apparatus, receives the indication representing an information that a second communication connection between the first communication apparatus and one or more second communication apparatus is compromised or lost. In response, the base station transmits, via the first communication connection and to one or more second communication apparatus, control information items for scheduling or modifying the operation of electronic components, required for receiving wireless transmissions from the first communication apparatus over the second communication connection, in the first and the second operating modes, respectively. The one or more second communication apparatus receive, via the first communication connection, and from the base station of the radio access network, the control information items for scheduling or modifying operation of the electronic components, required for receiving wireless transmissions over the second communication connection, in the first or the second operating mode, respectively, and apply the received control information items accordingly. Control information items received via the first communication connection override control information items previously received via the second communication connection.

The methods of the first, third, fifth, and seventh aspect of the invention may be represented by computer program instructions which, when executed by a microprocessor, cause a microprocessor and/or control hardware components of a first or second communication apparatus or of a base station as presented hereinbefore, respectively, to execute the respective method of controlling the respective apparatus.

The computer program instructions may be retrievably stored or transmitted on a computer-readable medium or data carrier. The medium or the data carrier may by physically embodied, e.g., in the form of a hard disk, solid state disk, flash memory device or the like. However, the medium or the data carrier may also comprise a modulated electro-magnetic, electrical, or optical signal that is received by the computer by means of a corresponding receiver, and that is transferred to and stored in a memory of the computer.

The first and second communication apparatus may be one and the same communication apparatus that can optionally assume the role of the first and second communication apparatus, respectively. Such apparatus may be comprised in a vehicle or a road-side unit.

The invention described hereinbefore provides enhanced reliability to management of sidelink DRX operation by means of gNB assistance or, more general, by a network entity that can access multiple UEs over a communication channel that is different from the sidelink communication channel. As the UEs are provided with information for synchronising the ON and OFF periods of the receivers for the sidelink communication through a separate communication channel, that may need to be permanently active anyway, synchronisation of the receivers for the sidelink communication or at least establishing coincident ON-modes for all receivers may be attained or restored faster. Hence, the proposed method provides more efficient use of UE energy, which is typically stored in batteries, thus prolonging the operating time between charges.

While the invention has been described using 3GPP 5G as an example, it may also be applied to sidelink communication via Bluetooth in wireless LAN networks, e.g., a wireless LAN access point or any other suitable entity in the wireless LAN network instructs one or more UEs to bring their Bluetooth receivers into an active state on a specified channel.

### BRIEF DESCRIPTION OF THE DRAWINGS

In the following section the invention will be described with reference to the figures of the drawing. The examples provided in the drawing are illustrative only, and should not be considered limiting the scope of the claims. In the drawing
- Fig. 1: illustrates various communication paths between devices using a wireless network infrastructure and devices using sidelink communication,
- Fig. 2: illustrates examples of low and high energy saving depending on the ON/OFF ratio during a DRX cycle,
- Fig. 3: shows examples of increased energy saving and flexible communication through use of DRX control messages,
- Fig. 4: illustrates an exemplary situation in which sidelink communication may be difficult,
- Fig. 5: shows an exemplary situation in which the transmitter TX has determined that one of the receivers has not received a transmission over the sidelink communication channel,
- Fig. 6: shows the transmitter's action following the exemplary situation illustrated in figure 5,
- Fig. 7: illustrates the gNB's action following the exemplary situation shown in figure 6,
- Fig. 8: shows the message flow of alternatives for letting the first device know that the second device's DRX scheme is at least temporarily synchronised with that of other second devices,
- Fig. 9: shows an example how to transmit DRX control information items from a base station of a radio access network to a second communication apparatus within an existing communication data structure,
- Fig. 10: shows a flow diagram of a method in accordance with the invention executed in a first device,
- Fig. 11: shows a flow diagram of a method in accordance with the invention executed in a second device,
- Fig. 12: shows a flow diagram of a method in accordance with the invention executed in a base station of a radio access network,
- Fig. 13: shows an exemplary block diagram of a first or second communication apparatus in accordance with the second or fourth aspect of the present invention, and
- Fig. 14: shows an exemplary block diagram of a base station in accordance with the sixth aspect of the present invention.

In the figures, identical or similar elements may be referenced using the same reference designators.

### DETAILED DESCRIPTION OF EMBODIMENTS

Figures 1 through 4 and 9 have been described further above and will not be discussed again.

Figure 5 shows an exemplary situation in which the first device TX, has determined that one of the second devices, RX1, has not received, indicated by the crossed check box, a transmission over the sidelink communication channel, e.g., a DRX control transmission like a Go-to-sleep command, whereas the other two second devices, RX2 and RX3, have received the DRX control transmission, indicated by the checked check box. The transmitter may have determined the situation from signal quality measurements on signals received from the respective second devices or from HARQ feedback. A likely reason for the second device RX1 not having received the transmission is that it was in an OFF state in accordance with its DRX regime.

Figure 6 shows the next step taken by the first device TX, which is signalling to the network, more specifically to the base station, or gNB, represented by the antenna pole, the first and second devices TX, RX1, RX and RX3 are communicatively attached to, that it needs assistance in transmitting a message to second device RX1, for example, for synchronizing the DRX regime of second device RX1 with that of the other second devices RX2 and RX3, under control of the first device TX. In response to the message from the first device TX, gNB transmits control information items, represented by the battery and leaf symbols in Figure 7, enabling the second device RX1 to at least temporarily synchronise its DRX regime with that of the other second devices RX2 and RX3, as instructed by the first device TX.

Figure 8 shows the message flow of alternatives for letting the first device TX know that the second device's RX1 DRX scheme is at least temporarily synchronised with that of the other second devices RX2 and RX3. In a first option, which may be dubbed direct mode, the first device TX receives feedback, e.g., an ACK message, directly from the second device RX1 through the second communication connection, indicated by the dash-dotted arrow. In a second option, which may be dubbed indirect mode, the second device RX1 transmits feedback, e.g., an ACK message, to the base station gNB, which subsequently forwards the message to the first device TX, indicated by the dash-double dotted arrows. In a third option, which may be dubbed serendipity mode, the first device TX learns that the DRX scheme of the second device RX1 is at least temporarily synchronised with that of the other second devices RX2 and RX3 in a similar way as it learned that the second communication connection was lost or compromised, by receiving some data or message in response to a prior transmission to the group. Obviously, the third mode is not represented in the figure.

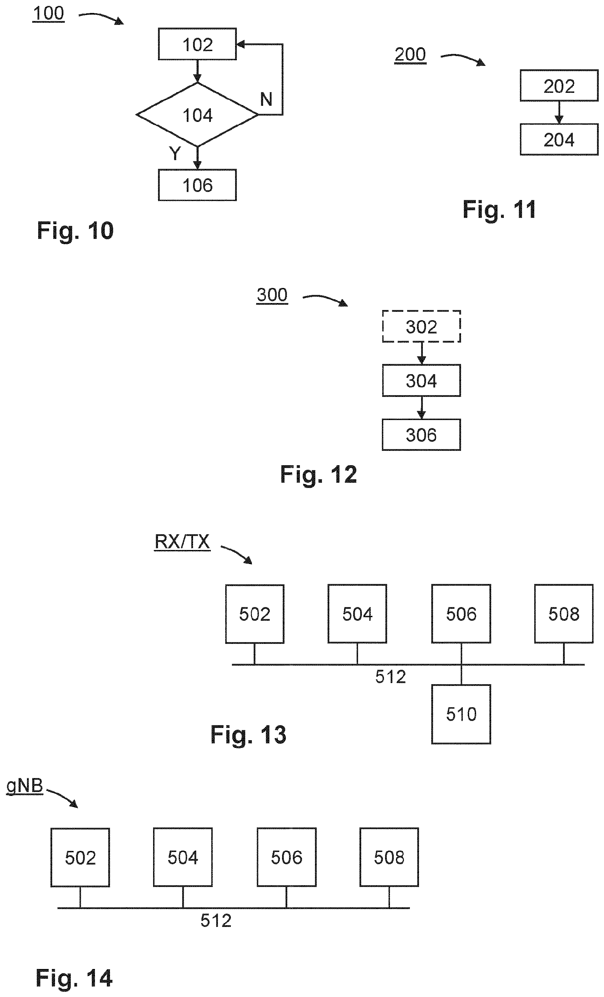

Figure 10 shows a flow diagram of a method 100 in accordance with the first aspect of the invention executed in a first device TX. In step 102 one or more control information items are transmitted via the second communication connection PC5 to one or more second devices RX1, RX2, RX3. In step 104 the first communication device TX determines, if one or more second communication apparatus RX1, RX2, RX3 did not receive one or more control information items previously transmitted via the second communication connection PC5. In the negative case, "no"-branch of step 104, the first device keeps transmitting as appropriate. In the positive case, "yes"-branch of step 104, the first device transmits, in step 106, a corresponding indication, via the first communication connection Uu, to the base station gNB of the radio access network.

Figure 11 shows a flow diagram of a method 200 in accordance with the invention executed in a second device RX1, RX2, RX3. In step 202 the second device RX1, RX2, RX3 receives, via the first communication connection uU, and from a base station gNB of the radio access network, control information items for scheduling or modifying operation of the electronic components, required for receiving wireless transmissions over the second communication connection PC5, in the first or the second operating mode, respectively. In step 204 the second device RX1, RX2, RX3 applies the control information items received via the first communication connection uU, for operating of the electronic components, required for receiving wireless transmissions over the second communication connection PC5, in an according operating mode, overriding any previously set operating schedule or control information items previously received via the second communication connection PC5.

Figure 12 shows a flow diagram of a method 300 in accordance with the invention executed in a base station gNB of a radio access network. In step 304 the base station gNB receives, via the first communication connection uU, and from a first communication apparatus TX, an indication representing an information that a second communication connection between the first communication apparatus TX and one or more second communication apparatus RX1, RX2, RX3 is compromised or lost. In step 306 the base station gNB transmits, via the first communication connection Uu and to one or more second communication apparatus RX1, RX2, RX3, control information items for scheduling or modifying the operation of electronic components, required for receiving wireless transmissions from the first communication apparatus TX over the second communication connection PC5, in the first and the second operating modes, respectively. In particular the base station gNB may transmit a control information item that causes a receiver adapted for communicating over the second communicating connection to assume a first operating mode, such that transmissions from the first communication apparatus can be received. This may include an identification of one or more carriers in the second communication connection PC5, which are to be activated or deactivated. In 302, which may be preceding all other steps of the method, the base station gNB may establish and maintain a correspondence between identifiers that are assigned to first and second communication apparatus TX, RX1, RX2, RX3 for use in the first and the second communication connection, respectively.

Figure 13 shows an exemplary block diagram of a first or second communication apparatus TX, RX1, RX2, RX2 in accordance with the second or fourth aspect of the present invention. The first or second communication apparatus TX, RX1, RX2, RX2 comprise one or more microprocessors 502, a volatile memory 504, a non-volatile memory 506, a first communication interface 508 adapted to communicate via a first communication connection uU, and a second communication interface 510 adapted to communicate via a second communication connection PC5, which are communicatively connected via at least one data connection or bus 512. The first and second communication interface 508, 510 may comprise appropriate receiver and transmitter means. The non-volatile memory 506 stores computer program instructions which, when executed by the microprocessor 502, cause the first or second communication apparatus TX, RX1, RX2, RX2 to at least execute parts of the methods according to the first and/or third aspect of the present invention as presented above.

Figure 14 shows an exemplary block diagram of a base station gNB in accordance with the sixth aspect of the present invention. The base station gNB comprises one or more microprocessors 502, a volatile memory 504, a non-volatile memory 506, and a first communication interface 508 adapted to communicate via a first communication connection uU, which are communicatively connected via at least one data connection or bus 512. The first communication interface 508 may comprise appropriate receiver and transmitter means. The non-volatile memory 506 stores computer program instructions which, when executed by the microprocessor 502, cause the base station gNB to execute the method according to the fifth aspect of the present invention as presented above.

### LIST OF REFERENCE NUMERALS (PART OF THE DESCRIPTION)

- 100: method (first communication apparatus)
- 102: transmitting (PC5)
- 104: determining
- 106: transmitting (uU)
- 200: method (second communication apparatus)
- 202: receive
- 204: apply
- 300: method (base station)
- 302: establish/maintain correspondence
- 304: receive indication
- 306: transmit control information items
- 400: method (system)
- 502: microprocessor
- 504: volatile memory
- 506: non-volatile memory
- 508: first communication interface
- 510: second communication interface
- 512: data connection/bus
- gNB: base station
- PC5: second wireless communication connection
- RX1, RX2, RX3: second communication apparatus
- TX: first communication apparatus
- Uu: first wireless communication connection

## Claims

1. Method (100) of operating a first communication apparatus (TX) for controlling electronic components of one or more second communication apparatus (RX1, RX2, RX3), the first communication apparatus (TX) being configured to establish, maintain and terminate a first wireless communication connection (Uu) with a base station (gNB) of a radio access network and further being configured to establish, maintain and terminate second, direct wireless communication connections (PC5) with the one or more second communication apparatus (RX1, RX2, RX3), wherein the first communication apparatus (TX) is further configured to transmit, via the second communication connection (PC5), control information items for scheduling or modifying operation of the electronic components required for receiving wireless transmissions over the second communication connection (PC5), in the one or more second communication apparatus (RX1, RX2, RX3) in a first or a second operating mode, respectively, wherein, in the first operating mode, the electronic components of the one or more second communication apparatus (RX1, RX2, RX3) are powered and operative to receive wireless transmissions over the second communication connection (PC5) and wherein, in the second operating mode, the electronic components of the one or more second communication apparatus (RX1, RX2, RX3) are not powered or are put in a low-power mode and are not operative to receive wireless transmissions over the second communication connection (PC5), **characterized in that** the method comprises:
- determining (104), if one or more second communication apparatus (RX1, RX2, RX3) did not receive one or more control information items previously transmitted via the second communication connection (PC5) and, in the positive case, transmitting (106) a corresponding indication, via the first communication connection (Uu), to the base station (gNB) of the radio access network.

2. The method (100) of claim 1, wherein determining (102) comprises measuring and evaluating a signal quality of the second communication connection (PC5) and/or evaluating hybrid automatic repeat request feedback on the second communication connection (PC5).

3. The method (100) of claim 1 or 2, wherein transmitting (104) the indication, via the first communication connection (Uu), to the base station (gNB) of the radio access network, comprises transmitting control information items for scheduling or modifying the operation of electronic components, required for receiving wireless transmissions over the second communication connection (PC5), in the one or more second communication apparatus (RX1, RX2, RX3) in the first and the second operating modes, respectively, and/or comprises transmitting control information destined to activate and deactivate, respectively, individual carriers used for communicating via the second communication connection, in response to received control information items.

4. The method (100) of one or more of claims 1 to 3, wherein the indication and/or the control information items are transmitted in the MAC sublayer or a physical control channel of the first wireless connection.

5. First communication apparatus (TX) configured to establish, maintain and terminate a first wireless communication (Uu) connection with a base station (gNB) of a radio access network, and further configured to establish, maintain and terminate second, direct wireless communication connections (PC5) with one or more second communication apparatus (RX1, RX2, RX3), wherein the first communication apparatus (TX) is further configured to transmit (102), via the second communication connection (PC5), control information items (DRX) for scheduling or modifying operation of electronic components, required for receiving wireless transmissions over the second communication connection (PC5), in one or more second communication apparatus (RX1, RX2, RX3) in a first or a second operating mode, respectively, wherein, in the first operating mode, the electronic components of the one or more second communication apparatus (RX1, RX2, RX3) are powered and operative to receive wireless transmissions over the second communication connection (PC5) and wherein, in the second operating mode, the electronic components of the one or more second communication apparatus (RX1, RX2, RX3) are not powered or are put in a low-power mode and are not operative to receive wireless transmissions over the second communication connection (PC5),
**characterized in that** the first communication apparatus (TX) is further configured to determine (104), if one or more second communication apparatus (RX1, RX2, RX3) did not receive one or more control information items previously transmitted via the second communication connection (PC5) and, in the positive case, to transmit (106) a corresponding indication, via the first communication connection (Uu), to the base station (gNB) of the radio access network.

6. The first communication apparatus (TX) of claim 5 wherein, for determining (104) if one or more second communication apparatus (RX1, RX2, RX3) did not receive one or more control information items previously transmitted via the second communication connection (PC5), the first communication apparatus (TX) is configured to measure and evaluate a signal quality of the second communication connection (PC5) and/or to evaluate hybrid automatic repeat request feedback on the second communication connection (PC5).

7. The first communication apparatus (TX) of claim 5 or 6, wherein the first communication apparatus (TX) is configured to transmit (106), via the first communication connection (Uu) to the base station (gNB) of the radio access network and along with the indication, control information items for scheduling or modifying the operation of electronic components, required for receiving wireless transmissions over the second communication connection (PC5), in the second communication apparatus (RX1, RX2, RX3) in the first and the second operating modes, respectively, and/or control information destined to activate and deactivate, respectively, individual carriers used for communicating via the second communication connection, in response to received control information items.

8. A method (200) of operating a second communication apparatus (RX1, RX2, RX3), which is configured to establish, maintain and terminate a first wireless communication (Uu) connection with a base station (gNB) of a radio access network and which is further configured to establish, maintain and terminate a second, direct wireless communication connection (PC5) with a first communication apparatus (TX), the method comprising receiving, at the second communication apparatus (RX1, RX2, RX3) and via the second communication connection (PC5), control information items for scheduling or modifying operation of electronic components, required for receiving wireless transmissions over the second communication connection (PC5), in a first or a second operating mode, respectively, wherein, in the first operating mode, the electronic components of the second communication apparatus (RX1, RX2, RX3) are powered and operative to receive wireless transmissions over the second communication connection (PC5) and wherein, in the second operating mode, the electronic components of the second communication apparatus (RX1, RX2, RX3) are not powered or are put in a low-power mode and are not operative to receive wireless transmissions over the second communication connection (PC5),
**characterized in that** the method further comprises:
- receiving (202), via the first communication connection (Uu), and from a base station (gNB) of the radio access network, control information items for scheduling or modifying operation of the electronic components, required for receiving wireless transmissions over the second communication connection (PC5), in the first or the second operating mode, respectively, and
- applying (204) the control information items received via the first communication connection (Uu), for operating the electronic components, required for receiving wireless transmissions over the second communication connection PC5, in an according operating mode, wherein control information items received via the first communication connection (Uu) override control information items previously received via the second communication connection (PC5).

9. The method (200) of claim 8, wherein the control information items received via the first communication connection (Uu) are received in the MAC sublayer or in a physical control channel.

10. Second communication apparatus (RX1, RX2, RX3) configured to establish, maintain and terminate a first wireless communication (Uu) connection with a base station (gNB) of a radio access network, and further configured to establish, maintain and terminate second, direct wireless communication connections (PC5) with a first communication apparatus (TX), wherein the second communication apparatus (RX1, RX2, RX3) is further configured to receive, via the second communication connection (PC5), control information for scheduling operation of electronic components, required for receiving wireless transmissions over the second communication connection (PC5), in a first or a second operating mode, respectively, wherein, in the first operating mode, the electronic components of the second communication apparatus (RX1, RX2, RX3) are powered and operative to receive wireless transmissions and wherein, in the second operating mode, the electronic components of the second communication apparatus (RX1, RX2, RX3) are not powered or are put in a low-power mode and are not operative to receive wireless transmissions over the second communication connection (PC5),
**characterized in that** the second communication apparatus (RX1, RX2, RX3) is further configured to receive, via the first communication connection (Uu), and from a base station (gNB) of the radio access network, control information items for scheduling operation of the electronic components, required for receiving wireless transmissions over the second communication connection (PC5), in the first or the second operating mode, respectively, and to override control information items previously received via the second communication connection (PC5) with the control information items received via the first communication connection (Uu).

11. The second communication apparatus (Rx1, RX2, RX3) of claim 10, further configured to activate and deactivate, respectively, individual carriers used for communicating via the second communication connection (PC5), in response to received control information items.

12. A method (300) of operating a base station (gNB) of a radio access network, the base station (gNB) being configured to establish, maintain and terminate a first wireless communication connection (Uu) with one or more first and second communication apparatus (TX, RX1, RX2, RX3) in accordance with any one or more of claims 5 to 7 or 10 to 11, respectively,
**characterized in that** the method comprises:
- receiving (304), via the first communication connection (Uu) and from a first communication apparatus (TX), an indication representing an information that a second communication connection between the first communication apparatus (TX) and one or more second communication apparatus (RX1, RX2, RX3) is compromised or lost, and
- transmitting (306), via the first communication connection (Uu) and to one or more second communication apparatus (RX1, RX2, RX3), control information items for scheduling or modifying the operation of electronic components, required for receiving wireless transmissions from the first communication apparatus (TX) over the second communication connection (PC5), in the first and the second operating modes, respectively.

13. The method (300) of claim 12, further comprising establishing and maintaining (302) a correspondence between identifiers used in first and second communication apparatus (TX, RX1, RX2, RX3) for communicating via the first communication connection (Uu) and identifiers used in first and second communication apparatus (TX, RX1, RX2, RX3) for communicating via the second communication connection (PC5).

14. The method (300) of claim 12 or 13, wherein the control information items comprise an identification of one or more carriers in the second communication connection (PC5), which are to be activated or deactivated.

15. A base station (gNB) of a radio access network comprising one or more microprocessors (502), volatile and non-volatile memory (504, 506), and receiver and transmitter means (508), which are communicatively connected via at least one data connection or bus (512), wherein the non-volatile memory (506) comprises computer program instructions which, when executed by the one or more microprocessors (502) control the receiver and transmitter means (508) to establish, maintain and terminate first communication connections (Uu) with one or more first and second communication apparatus (TX, RX1, RX2, RX3) in accordance with one or more of claims 5 to 7 and 10 to 11, respectively, wherein the non-volatile memory (506) further stores computer program instructions which, when executed by the one or more microprocessors (502), configure the base station (gNB) to implement and execute the method of one of claims 12 to 14.

16. The base station (gNB) of claim 15, wherein the base station (gNB) is configured to establish, maintain, and terminate a first wireless communication (Uu) connection in accordance with 3GPP 5G and/or 6G standards.

17. A method of enabling communication between a first communication apparatus (TX) in accordance with one or more of claims 5 to 7 and one or more second communication apparatus (RX1, RX2, RX3) in accordance with one or more of claims 10 to 11, via a second communication connection (PC5), wherein the first communication apparatus (TX) and the one or more second communication apparatus (RX1, RX2, RX3) are further configured to communicate with a base station (gNB) of a radio access network via a first communication connection, the method comprising:
- the first communication apparatus (TX) determining (104), if one or more second communication apparatus (RX1, RX2, RX3) did not receive one or more control information items previously transmitted (102) via the second communication connection (PC5) and, in the positive case, transmitting (106) a corresponding indication, via the first communication connection (Uu), to the base station (gNB) of the radio access network,
- the base station (gNB) receiving (304), via the first communication connection (Uu) and from the first communication apparatus (TX), the indication representing an information that a second communication connection between the first communication apparatus (TX) and one or more second communication apparatus (RX1, RX2, RX3) is compromised or lost, and transmitting (306), via the first communication connection (Uu) and to one or more second communication apparatus (RX1, RX2, RX3), control information items for scheduling or modifying the operation of electronic components, required for receiving wireless transmissions from the first communication apparatus (TX) over the second communication connection (PC5), in the first and the second operating modes, respectively, and
- the one or more second communication apparatus (RX1, RX2, RX3) receiving (202), via the first communication connection (Uu), and from the base station (gNB) of the radio access network, the control information items for scheduling or modifying operation of the electronic components, required for receiving wireless transmissions over the second communication connection (PC5), in the first or the second operating mode, respectively, and applying (204) the control information items received via the first communication connection (Uu), for operating the electronic components, required for receiving wireless transmissions over the second communication connection PC5, in an according operating mode, wherein control information items received via the first communication connection (Uu) override control information items previously received via the second communication connection (PC5).

18. A computer program product comprising computer program instructions which, when executed by a microprocessor, cause the microprocessor and/or control hardware components of first communication apparatus (TX) in accordance with one of claims 5 to 7, of a second communication apparatus (RX1, RX2, RX3) in accordance with one of claims 10 to 11, or of a base station (gNB) in accordance with one of claims 15 to 16, respectively, to execute the method (100, 200, 300) of one or more of claims 1 to 4, 8 to 9, or 12 to 14, respectively.

19. A computer readable medium storing the computer program product of claim 18.

20. Vehicle or road-side unit having a communication device (TX, RX) configured to execute the method according to one or more of claims 1 to 4 and/or configured to execute the method according to one or more of claims 8 to 9.

## Patentansprüche

1. Verfahren (100) zum Betreiben einer ersten Kommunikationseinrichtung (TX) zum Steuern elektronischer Komponenten einer oder mehrerer zweiter Kommunikationseinrichtungen (RX1, RX2, RX3), wobei die erste Kommunikationseinrichtung (TX) konfiguriert ist, eine erste drahtlose Kommunikationsverbindung (Uu) mit einer Basisstation (gNB) eines Funkzugangsnetzwerks aufzubauen, aufrechtzuerhalten und zu beenden, und ferner konfiguriert ist, zweite, direkte drahtlose Kommunikationsverbindungen (PC5) mit der einen oder den mehreren zweiten Kommunikationseinrichtungen (RX1, RX2, RX3) aufzubauen, aufrechtzuerhalten und zu beenden, wobei die erste Kommunikationseinrichtung (TX) ferner konfiguriert ist, über die zweite Kommunikationsverbindung (PC5) Steuerinformationselemente zum Planen oder Modifizieren des Betriebs der elektronischen Komponenten, die zum Empfangen drahtloser Übertragungen über die zweite Kommunikationsverbindung (PC5) erforderlich sind, in der einen oder den mehreren zweiten Kommunikationseinrichtungen (RX1, RX2, RX3) in einem ersten bzw. einem zweiten Betriebsmodus zu übertragen, wobei im ersten Betriebsmodus die elektronischen Komponenten der einen oder der mehreren zweiten Kommunikationseinrichtungen (RX1, RX2, RX3) mit Strom versorgt werden und betriebsbereit sind, drahtlose Übertragungen über die zweite Kommunikationsverbindung (PC5) zu empfangen, und wobei im zweiten Betriebsmodus die elektronischen Komponenten der einen oder der mehreren zweiten Kommunikationseinrichtungen (RX1, RX2, RX3) nicht mit Strom versorgt werden oder in einen Niedrigleistungsmodus versetzt werden und nicht betriebsbereit sind, drahtlose Übertragungen über die zweite Kommunikationsverbindung (PC5) zu empfangen,
**dadurch gekennzeichnet, dass** das Verfahren umfasst:
- Bestimmen (104), ob eine oder mehrere zweite Kommunikationseinrichtungen (RX1, RX2, RX3) ein oder mehrere Steuerinformationselemente, die zuvor über die zweite Kommunikationsverbindung (PC5) übertragen wurden, nicht empfangen haben, und im positiven Fall Übertragen (106) einer entsprechenden Anzeige über die erste Kommunikationsverbindung (Uu) an die Basisstation (gNB) des Funkzugangsnetzwerks.

2. Verfahren (100) nach Anspruch 1, wobei das Bestimmen (102) ein Messen und Bewerten einer Signalqualität der zweiten Kommunikationsverbindung (PC5) und/oder das Bewerten einer Rückmeldung einer hybriden automatischen Wiederholungsanforderung auf der zweiten Kommunikationsverbindung (PC5) umfasst.

3. Verfahren (100) nach Anspruch 1 oder 2, wobei das Übertragen (104) der Anzeige über die erste Kommunikationsverbindung (Uu) an die Basisstation (gNB) des Funkzugangsnetzwerks das Übertragen von Steuerinformationselementen zum Planen oder Modifizieren des Betriebs elektronischer Komponenten, die zum Empfangen drahtloser Übertragungen über die zweite Kommunikationsverbindung (PC5) erforderlich sind, in der einen oder den mehreren zweiten Kommunikationseinrichtungen (RX1, RX2, RX3) im ersten bzw. im zweiten Betriebsmodus umfasst und/oder das Übertragen von Steuerinformationen umfasst, die dazu bestimmt sind, einzelne Träger, die zum Kommunizieren über die zweite Kommunikationsverbindung verwendet werden, als Reaktion auf empfangene Steuerinformationselemente zu aktivieren bzw. zu deaktivieren.

4. Verfahren (100) nach einem oder mehreren der Ansprüche 1 bis 3, wobei die Anzeige und/oder die Steuerinformationselemente in der MAC-Unterschicht oder einem physikalischen Steuerkanal der ersten drahtlosen Verbindung übertragen werden.

5. Erste Kommunikationseinrichtung (TX), die konfiguriert ist, eine erste drahtlose Kommunikationsverbindung (Uu) mit einer Basisstation (gNB) eines Funkzugangsnetzwerks aufzubauen, aufrechtzuerhalten und zu beenden, und ferner konfiguriert ist, die zweiten, direkten drahtlosen Kommunikationsverbindungen (PC5) mit einer oder mehreren zweiten Kommunikationseinrichtungen (RX1, RX2, RX3) aufzubauen, aufrechtzuerhalten und zu beenden, wobei die erste Kommunikationseinrichtung (TX) ferner konfiguriert ist, über die zweite Kommunikationsverbindung (PC5) Steuerinformationselemente (DRX) zum Planen oder Modifizieren des Betriebs elektronischer Komponenten, die zum Empfangen drahtloser Übertragungen über die zweite Kommunikationsverbindung (PC5) erforderlich sind, in einer oder mehreren zweiten Kommunikationseinrichtungen (RX1, RX2, RX3) in einem ersten bzw. einem zweiten Betriebsmodus zu übertragen (102), wobei im ersten Betriebsmodus die elektronischen Komponenten der einen oder der mehreren zweiten Kommunikationseinrichtungen (RX1, RX2, RX3) mit Strom versorgt werden und betriebsbereit sind, drahtlose Übertragungen über die zweite Kommunikationsverbindung (PC5) zu empfangen, und wobei im zweiten Betriebsmodus die elektronischen Komponenten der einen oder der mehreren zweiten Kommunikationseinrichtungen (RX1, RX2, RX3) nicht mit Strom versorgt werden oder in einen Niedrigleistungsmodus versetzt werden und nicht betriebsbereit sind, drahtlose Übertragungen über die zweite Kommunikationsverbindung (PC5) zu empfangen,
**dadurch gekennzeichnet, dass** die erste Kommunikationseinrichtung (TX) ferner konfiguriert ist, zu bestimmen (104), ob eine oder mehrere zweite Kommunikationseinrichtungen (RX1, RX2, RX3) ein oder mehrere Steuerinformationselemente, die zuvor über die zweite Kommunikationsverbindung (PC5) übertragen wurden, nicht empfangen haben, und im positiven Fall eine entsprechende Anzeige über die erste Kommunikationsverbindung (Uu) an die Basisstation (gNB) des Funkzugangsnetzwerks zu übertragen (106).

6. Erste Kommunikationseinrichtung (TX) nach Anspruch 5, wobei die erste Kommunikationseinrichtung (TX) zum Bestimmen (104), ob eine oder mehrere zweite Kommunikationseinrichtungen (RX1, RX2, RX3) ein oder mehrere Steuerinformationselemente, die zuvor über die zweite Kommunikationsverbindung (PC5) übertragen wurden, nicht empfangen haben, konfiguriert ist, eine Signalqualität der zweiten Kommunikationsverbindung (PC5) zu messen und bewerten und/oder eine Rückmeldung einer hybriden automatischen Wiederholungsanforderung auf der zweiten Kommunikationsverbindung (PC5) zu bewerten.

7. Erste Kommunikationseinrichtung (TX) nach Anspruch 5 oder 6, wobei die erste Kommunikationseinrichtung (TX) konfiguriert ist, über die erste Kommunikationsverbindung (Uu) an die Basisstation (gNB) des Funkzugangsnetzwerks und zusammen mit der Anzeige Steuerinformationselemente zum Planen oder Modifizieren des Betriebs elektronischer Komponenten, die zum Empfangen drahtloser Übertragungen über die zweite Kommunikationsverbindung (PC5) erforderlich sind, in den zweiten Kommunikationseinrichtungen (RX1, RX2, RX3) im ersten bzw. im zweiten Betriebsmodus und/oder Steuerinformationen zu übertragen (106), die dazu bestimmt sind, einzelne Träger, die zum Kommunizieren über die zweite Kommunikationsverbindung verwendet werden, als Reaktion auf empfangene Steuerinformationselemente zu aktivieren bzw. zu deaktivieren.

8. Verfahren (200) zum Betreiben einer zweiten Kommunikationseinrichtung (RX1, RX2, RX3), die konfiguriert ist, eine erste drahtlose Kommunikationsverbindung (Uu) mit einer Basisstation (gNB) eines Funkzugangsnetzwerks aufzubauen, aufrechtzuerhalten und zu beenden, und die ferner konfiguriert ist, eine zweite, direkte drahtlose Kommunikationsverbindung (PC5) mit einer ersten Kommunikationseinrichtung (TX) aufzubauen, aufrechtzuerhalten und zu beenden, wobei das Verfahren das Empfangen von Steuerinformationselementen zum Planen oder Modifizieren des Betriebs elektronischer Komponenten, die zum Empfangen drahtloser Übertragungen über die zweite Kommunikationsverbindung (PC5) erforderlich sind, in einem ersten bzw. einem zweiten Betriebsmodus an der zweiten Kommunikationseinrichtung (RX1, RX2, RX3) und über die zweite Kommunikationsverbindung (PC5) umfasst, wobei im ersten Betriebsmodus die elektronischen Komponenten der zweiten Kommunikationseinrichtung (RX1, RX2, RX3) mit Strom versorgt werden und betriebsbereit sind, drahtlose Übertragungen über die zweite Kommunikationsverbindung (PC5) zu empfangen, und wobei im zweiten Betriebsmodus die elektronischen Komponenten der zweiten Kommunikationseinrichtung (RX1, RX2, RX3) nicht mit Strom versorgt werden oder in einen Niedrigleistungsmodus versetzt werden und nicht betriebsbereit sind, drahtlose Übertragungen über die zweite Kommunikationsverbindung (PC5) zu empfangen,
**dadurch gekennzeichnet, dass** das Verfahren ferner umfasst:
- Empfangen (202) von Steuerinformationselementen zum Planen oder Modifizieren des Betriebs der elektronischen Komponenten, die zum Empfangen drahtloser Übertragungen über die zweite Kommunikationsverbindung (PC5) erforderlich sind, im ersten bzw. im zweiten Betriebsmodus über die erste Kommunikationsverbindung (Uu) und von einer Basisstation (gNB) des Funkzugangsnetzwerks, und
- Anwenden (204) der über die erste Kommunikationsverbindung (Uu) empfangenen Steuerinformationselemente zum Betreiben der elektronischen Komponenten, die zum Empfangen drahtloser Übertragungen über die zweite Kommunikationsverbindung PC5 erforderlich sind, in einem entsprechenden Betriebsmodus, wobei über die erste Kommunikationsverbindung (Uu) empfangene Steuerinformationselemente zuvor über die zweite Kommunikationsverbindung (PC5) empfangene Steuerinformationselemente außer Kraft setzen.

9. Verfahren (200) nach Anspruch 8, wobei die über die erste Kommunikationsverbindung (Uu) empfangenen Steuerinformationselemente in der MAC-Unterschicht oder in einem physikalischen Steuerkanal empfangen werden.

10. Zweite Kommunikationseinrichtung (RX1, RX2, RX3), die konfiguriert ist, eine erste drahtlose Kommunikationsverbindung (Uu) mit einer Basisstation (gNB) eines Funkzugangsnetzwerks aufzubauen, aufrechtzuerhalten und zu beenden und ferner konfiguriert ist, zweite, direkte drahtlose Kommunikationsverbindungen (PC5) mit einer ersten Kommunikationseinrichtung (TX) aufzubauen, aufrechtzuerhalten und zu beenden, wobei die zweite Kommunikationseinrichtung (RX1, RX2, RX3) ferner konfiguriert ist, über die zweite Kommunikationsverbindung (PC5) Steuerinformationen zum Planen des Betriebs elektronischer Komponenten, die zum Empfangen drahtloser Übertragungen über die zweite Kommunikationsverbindung (PC5) erforderlich sind, in einem ersten bzw. einem zweiten Betriebsmodus zu empfangen, wobei im ersten Betriebsmodus die elektronischen Komponenten der zweiten Kommunikationseinrichtung (RX1, RX2, RX3) mit Strom versorgt werden und betriebsbereit sind, drahtlose Übertragungen zu empfangen, und wobei im zweiten Betriebsmodus die elektronischen Komponenten der zweiten Kommunikationseinrichtung (RX1, RX2, RX3) nicht mit Strom versorgt werden oder in einen Niedrigleistungsmodus versetzt werden und nicht betriebsbereit sind, drahtlose Übertragungen über die zweite Kommunikationsverbindung (PC5) zu empfangen,
**dadurch gekennzeichnet, dass** die zweite Kommunikationseinrichtung (RX1, RX2, RX3) ferner konfiguriert ist, über die erste Kommunikationsverbindung (Uu) und von einer Basisstation (gNB) des Funkzugangsnetzwerks Steuerinformationselemente zum Planen des Betriebs der elektronischen Komponenten, die zum Empfangen drahtloser Übertragungen über die zweite Kommunikationsverbindung (PC5) erforderlich sind, im ersten bzw. im zweiten Betriebsmodus zu empfangen und zuvor über die zweite Kommunikationsverbindung (PC5) empfangene Steuerinformationselemente mit den über die erste Kommunikationsverbindung (Uu) empfangenen Steuerinformationselementen außer Kraft zu setzen.

11. Zweite Kommunikationseinrichtung (Rx1, RX2, RX3) nach Anspruch 10, die ferner konfiguriert ist, einzelne Träger, die zum Kommunizieren über die zweite Kommunikationsverbindung (PC5) verwendet werden, als Reaktion auf empfangene Steuerinformationselemente zu aktivieren bzw. deaktivieren.

12. Verfahren (300) zum Betreiben einer Basisstation (gNB) eines Funkzugangsnetzwerks, wobei die Basisstation (gNB) konfiguriert ist, eine erste drahtlose Kommunikationsverbindung (Uu) mit einer oder mehreren ersten und zweiten Kommunikationseinrichtungen (TX, RX1, RX2, RX3) nach einem oder mehreren der Ansprüche 5 bis 7 bzw. 10 bis 11 aufzubauen, aufrechtzuerhalten und zu beenden,
**dadurch gekennzeichnet, dass** das Verfahren umfasst:
- Empfangen (304) einer Anzeige, die eine Information darstellt, dass eine zweite Kommunikationsverbindung zwischen der ersten Kommunikationseinrichtung (TX) und einer oder mehreren zweiten Kommunikationseinrichtungen (RX1, RX2, RX3) beeinträchtigt oder verloren ist, über die erste Kommunikationsverbindung (Uu) und von einer ersten Kommunikationseinrichtung (TX), und
- Übertragen (306) von Steuerinformationselementen zum Planen oder Modifizieren des Betriebs elektronischer Komponenten, die zum Empfangen drahtloser Übertragungen von der ersten Kommunikationseinrichtung (TX) über die zweite Kommunikationsverbindung (PC5) erforderlich sind, im ersten bzw. im zweiten Betriebsmodus über die erste Kommunikationsverbindung (Uu) und an eine oder mehrere zweite Kommunikationseinrichtungen (RX1, RX2, RX3).

13. Verfahren (300) nach Anspruch 12, ferner umfassend das Aufbauen und Aufrechterhalten (302) einer Entsprechung zwischen Identifikatoren, die in ersten und zweiten Kommunikationseinrichtungen (TX, RX1, RX2, RX3) zum Kommunizieren über die erste Kommunikationsverbindung (Uu) verwendet werden, und Identifikatoren, die in ersten und zweiten Kommunikationseinrichtungen (TX, RX1, RX2, RX3) zum Kommunizieren über die zweite Kommunikationsverbindung (PC5) verwendet werden.

14. Verfahren (300) nach Anspruch 12 oder 13, wobei die Steuerinformationselemente eine Identifikation eines oder mehrerer Träger in der zweiten Kommunikationsverbindung (PC5) umfassen, die aktiviert oder deaktiviert werden sollen.

15. Basisstation (gNB) eines Funkzugangsnetzwerks, umfassend einen oder mehrere Mikroprozessoren (502), flüchtigen und nichtflüchtigen Speicher (504, 506) und Empfänger- und Übertragungsmittel (508), die über mindestens eine Datenverbindung oder einen Bus (512) kommunikativ verbunden sind, wobei der nichtflüchtige Speicher (506) Computerprogrammanweisungen umfasst, die, wenn sie von dem einen oder den mehreren Mikroprozessoren (502) ausgeführt werden, die Empfänger- und Übertragungsmittel (508) steuern, um erste Kommunikationsverbindungen (Uu) mit einer oder mehreren ersten und zweiten Kommunikationseinrichtungen (TX, RX1, RX2, RX3) nach einem oder mehreren der Ansprüche 5 bis 7 bzw. 10 bis 11 aufzubauen, aufrechtzuerhalten und zu beenden, wobei der nichtflüchtige Speicher (506) ferner Computerprogrammanweisungen speichert, die, wenn sie von dem einen oder den mehreren Mikroprozessoren (502) ausgeführt werden, die Basisstation (gNB) konfigurieren, das Verfahren nach einem der Ansprüche 12 bis 14 zu implementieren und auszuführen.

16. Basisstation (gNB) nach Anspruch 15, wobei die Basisstation (gNB) konfiguriert ist, eine erste drahtlose Kommunikationsverbindung (Uu) in Übereinstimmung mit 3GPP-5G- und/oder 6G-Standards aufzubauen, aufrechtzuerhalten und zu beenden.

17. Verfahren zum Ermöglichen der Kommunikation zwischen einer ersten Kommunikationseinrichtung (TX) nach einem oder mehreren der Ansprüche 5 bis 7 und einer oder mehreren zweiten Kommunikationseinrichtungen (RX1, RX2, RX3) nach einem oder mehreren der Ansprüche 10 bis 11 über eine zweite Kommunikationsverbindung (PC5), wobei die erste Kommunikationseinrichtung (TX) und die eine oder die mehreren zweiten Kommunikationseinrichtungen (RX1, RX2, RX3) ferner konfiguriert sind, mit einer Basisstation (gNB) eines Funkzugangsnetzwerks über eine erste Kommunikationsverbindung zu kommunizieren, wobei das Verfahren umfasst:
- die erste Kommunikationseinrichtung (TX) bestimmt (104), ob eine oder mehrere zweite Kommunikationseinrichtungen (RX1, RX2, RX3) ein oder mehrere Steuerinformationselemente, die zuvor über die zweite Kommunikationsverbindung (PC5) übertragen wurden (102), nicht empfangen haben, und überträgt im positiven Fall (106) eine entsprechende Anzeige über die erste Kommunikationsverbindung (Uu) an die Basisstation (gNB) des Funkzugangsnetzwerks,
- die Basisstation (gNB) empfängt (304) über die erste Kommunikationsverbindung (Uu) und von der ersten Kommunikationseinrichtung (TX) die Anzeige, die eine Information darstellt, dass eine zweite Kommunikationsverbindung zwischen der ersten Kommunikationseinrichtung (TX) und eine oder mehrere zweite Kommunikationseinrichtungen (RX1, RX2, RX3) beeinträchtigt oder verloren ist, und überträgt (306) über die erste Kommunikationsverbindung (Uu) und an eine oder mehrere zweite Kommunikationseinrichtungen (RX1, RX2, RX3) Steuerinformationselemente zum Planen oder Modifizieren des Betriebs elektronischer Komponenten, die zum Empfangen drahtloser Übertragungen von der ersten Kommunikationseinrichtung (TX) über die zweite Kommunikationsverbindung (PC5) erforderlich sind, im ersten bzw. im zweiten Betriebsmodus, und
- die eine oder die mehreren zweiten Kommunikationseinrichtungen (RX1, RX2, RX3) empfangen (202) über die erste Kommunikationsverbindung (Uu) und von der Basisstation (gNB) des Funkzugangsnetzwerks die Steuerinformationselemente zum Planen oder Modifizieren des Betriebs der elektronischen Komponenten, die zum Empfangen drahtloser Übertragungen über die zweite Kommunikationsverbindung (PC5) erforderlich sind, im ersten bzw. im zweiten Betriebsmodus und wenden (204) die über die erste Kommunikationsverbindung (Uu) empfangenen Steuerinformationselemente zum Betreiben der elektronischen Komponenten, die zum Empfangen drahtloser Übertragungen über die zweite Kommunikationsverbindung PC5 erforderlich sind, in einem entsprechenden Betriebsmodus an, wobei über die erste Kommunikationsverbindung (Uu) empfangene Steuerinformationselemente zuvor über die zweite Kommunikationsverbindung (PC5) empfangene Steuerinformationselemente außer Kraft setzen.

18. Computerprogrammprodukt, umfassend Computerprogrammanweisungen, die, wenn sie von einem Mikroprozessor ausgeführt werden, den Mikroprozessor und/oder Steuerungshardwarekomponenten einer ersten Kommunikationseinrichtung (TX) nach einem der Ansprüche 5 bis 7, einer zweiten Kommunikationseinrichtung (RX1, RX2, RX3) nach einem der Ansprüche 10 bis 11 oder einer Basisstation (gNB) nach einem der Ansprüche 15 bis 16 veranlassen, das Verfahren (100, 200, 300) nach einem oder mehreren der Ansprüche 1 bis 4, 8 bis 9 bzw. 12 bis 14 auszuführen.

19. Computerlesbares Medium, das das Computerprogrammprodukt nach Anspruch 18 speichert.

20. Fahrzeug oder Straßenrandeinheit mit einer Kommunikationsvorrichtung (TX, RX), die konfiguriert ist, das Verfahren nach einem oder mehreren der Ansprüche 1 bis 4 auszuführen und/oder konfiguriert ist, das Verfahren nach einem oder mehreren der Ansprüche 8 bis 9 auszuführen.

## Revendications

1. Procédé (100) de fonctionnement d'un premier appareil de communication (TX) pour la commande de composants électroniques d'un ou plusieurs seconds appareils de communication (RX1, RX2, RX3), le premier appareil de communication (TX) étant configuré pour établir, maintenir et interrompre une première connexion de communication sans fil (Uu) avec une station de base (gNB) d'un réseau d'accès radio, et étant en outre configuré pour établir, maintenir et interrompre des secondes connexions de communication sans fil directes (PC5) avec le ou les seconds appareils de communication (RX1, RX2, RX3), dans lequel le premier appareil de communication (TX) est en outre configuré pour transmettre, par l'intermédiaire de la seconde connexion de communication (PC5), des éléments d'informations de commande permettant de planifier ou de modifier le fonctionnement des composants électroniques nécessaires à la réception de transmissions sans fil par l'intermédiaire de la seconde connexion de communication (PC5), dans le ou les seconds appareils de communication (RX1, RX2, RX3), dans un premier ou un second mode de fonctionnement, respectivement, dans lequel, dans le premier mode de fonctionnement, les composants électroniques du ou des seconds appareils de communication (RX1, RX2, RX3) sont sous tension et servent à recevoir des transmissions sans fil par l'intermédiaire de la seconde connexion de communication (PC5) et dans lequel, dans le second mode de fonctionnement, les composants électroniques du ou des seconds appareils de communication (RX1, RX2, RX3) ne sont pas sous tension ou sont placés dans un mode basse consommation et ne servent pas à recevoir des transmissions sans fil par l'intermédiaire de la seconde connexion de communication (PC5),
**caractérisé en ce que** le procédé consiste à :
- déterminer (104), si un ou plusieurs seconds appareils de communication (RX1, RX2, RX3) n'ont pas reçu un ou plusieurs éléments d'informations de commande précédemment transmis par l'intermédiaire de la seconde connexion de communication (PC5) et, dans le cas positif, transmettre (106) une indication correspondante, par l'intermédiaire de la première connexion de communication (Uu), à la station de base (gNB) du réseau d'accès radio.

2. Procédé (100) selon la revendication 1, dans lequel la détermination (102) comprend la mesure et l'évaluation d'une qualité de signal de la seconde connexion de communication (PC5) et/ou l'évaluation d'un retour d'informations de demande de répétition automatique hybride sur la seconde connexion de communication (PC5).

3. Procédé (100) selon la revendication 1 ou 2, dans lequel la transmission (104) de l'indication, par l'intermédiaire de la première connexion de communication (Uu), à la station de base (gNB) du réseau d'accès radio, comprend la transmission d'éléments d'informations de commande pour la planification ou la modification du fonctionnement des composants électroniques, nécessaires à la réception de transmissions sans fil par l'intermédiaire de la seconde connexion de communication (PC5), dans le ou les seconds appareils de communication (RX1, RX2, RX3) dans les premier et second modes de fonctionnement, respectivement, et/ou comprend la transmission d'informations de commande destinées à activer et à désactiver, respectivement, les porteuses individuelles utilisées pour une communication par l'intermédiaire de la seconde connexion de communication, en réponse aux éléments d'informations de commande reçus.

4. Procédé (100) selon une ou plusieurs des revendications 1 à 3, dans lequel l'indication et/ou les éléments d'informations de commande sont transmis dans la sous-couche MAC ou dans un canal physique de commande de la première connexion sans fil.

5. Premier appareil de communication (TX) configuré pour établir, maintenir et interrompre une première connexion de communication sans fil (Uu) avec une station de base (gNB) d'un réseau d'accès radio, et configuré en outre pour établir, maintenir et interrompre des secondes connexions de communication sans fil directes (PC5) avec un ou plusieurs seconds appareils de communication (RX1, RX2, RX3), dans lequel le premier appareil de communication (TX) est en outre configuré pour transmettre (102), par l'intermédiaire de la seconde connexion de communication (PC5), des éléments d'informations de commande (DRX) permettant de planifier ou de modifier le fonctionnement de composants électroniques, nécessaires à la réception de transmissions sans fil par l'intermédiaire de la seconde connexion de communication (PC5), dans un ou plusieurs seconds appareils de communication (RX1, RX2, RX3), dans un premier ou un second mode de fonctionnement, respectivement, dans lequel, dans le premier mode de fonctionnement, les composants électroniques du ou des seconds appareils de communication (RX1, RX2, RX3) sont sous tension et servent à recevoir des transmissions sans fil par l'intermédiaire de la seconde connexion de communication (PC5) et dans lequel, dans le second mode de fonctionnement, les composants électroniques du ou des seconds appareils de communication (RX1, RX2, RX3) ne sont pas sous tension ou sont placés dans un mode basse consommation et ne servent pas à recevoir des transmissions sans fil par l'intermédiaire de la seconde connexion de communication (PC5), **caractérisé en ce que** le premier appareil de communication (TX) est en outre configuré pour déterminer (104), si un ou plusieurs seconds appareils de communication (RX1, RX2, RX3) n'ont pas reçu un ou plusieurs éléments d'informations de commande précédemment transmis par l'intermédiaire de la seconde connexion de communication (PC5) et, dans le cas positif, pour transmettre (106) une indication correspondante, par l'intermédiaire de la première connexion de communication (Uu), à la station de base (gNB) du réseau d'accès radio.

6. Premier appareil de communication (TX) selon la revendication 5, dans lequel, pour déterminer (104) si un ou plusieurs seconds appareils de communication (RX1, RX2, RX3) n'ont pas reçu un ou plusieurs éléments d'informations de commande précédemment transmis par l'intermédiaire de la seconde connexion de communication (PC5), le premier appareil de communication (TX) est configuré pour mesurer et évaluer une qualité de signal de la seconde connexion de communication (PC5) et/ou pour évaluer un retour d'informations de demande de répétition automatique hybride sur la seconde connexion de communication (PC5).

7. Premier appareil de communication (TX) selon la revendication 5 ou 6, dans lequel le premier appareil de communication (TX) est configuré pour transmettre (106), par l'intermédiaire de la première connexion de communication (Uu), à la station de base (gNB) du réseau d'accès radio et conjointement avec l'indication, des éléments d'informations de commande pour la planification ou la modification du fonctionnement des composants électroniques, nécessaires à la réception de transmissions sans fil par l'intermédiaire de la seconde connexion de communication (PC5), dans le second appareil de communication (RX1, RX2, RX3) dans les premier et second modes de fonctionnement, respectivement, et/ou des informations de commande destinées à activer et à désactiver, respectivement, les porteuses individuelles utilisées pour une communication par l'intermédiaire de la seconde connexion de communication, en réponse aux éléments d'informations de commande reçus.

8. Procédé (200) de fonctionnement d'un second appareil de communication (RX1, RX2, RX3), qui est configuré pour établir, maintenir et interrompre une première connexion de communication sans fil (Uu) avec une station de base (gNB) d'un réseau d'accès radio, et qui est en outre configuré pour établir, maintenir et interrompre une seconde connexion de communication sans fil directe (PC5) avec un premier appareil de communication (TX), le procédé comprenant la réception, au niveau du second appareil de communication (RX1, RX2, RX3) et par l'intermédiaire de la seconde connexion de communication (PC5), des éléments d'informations de commande permettant de planifier ou de modifier le fonctionnement de composants électroniques, nécessaires à la réception de transmissions sans fil par l'intermédiaire de la seconde connexion de communication (PC5), dans un premier ou un second mode de fonctionnement, respectivement, dans lequel, dans le premier mode de fonctionnement, les composants électroniques du second appareil de communication (RX1, RX2, RX3) sont sous tension et servent à recevoir des transmissions sans fil par l'intermédiaire de la seconde connexion de communication (PC5) et dans lequel, dans le second mode de fonctionnement, les composants électroniques du second appareil de communication (RX1, RX2, RX3) ne sont pas sous tension ou sont placés dans un mode basse consommation et ne servent pas à recevoir des transmissions sans fil par l'intermédiaire de la seconde connexion de communication (PC5),
**caractérisé en ce que** le procédé consiste en outre à :
- recevoir (202), par l'intermédiaire de la première connexion de communication (Uu), et en provenance d'une station de base (gNB) du réseau d'accès radio, des éléments d'informations de commande pour la planification ou la modification du fonctionnement des composants électroniques, nécessaires à la réception des transmissions sans fil par l'intermédiaire de la seconde connexion de communication (PC5), dans le premier ou le second mode de fonctionnement, respectivement, et
- appliquer (204) les éléments d'informations de commande reçus par l'intermédiaire de la première connexion de communication (Uu), pour le fonctionnement des composants électroniques, nécessaires à la réception des transmissions sans fil par l'intermédiaire de la seconde connexion de communication PC5, dans un mode de fonctionnement approprié, dans lequel les éléments d'informations de commande reçus par l'intermédiaire de la première connexion de communication (Uu) remplacent les éléments d'informations de commande précédemment reçus par l'intermédiaire de la seconde connexion de communication (PC5).

9. Procédé (200) selon la revendication 8, dans lequel les éléments d'informations de commande reçus par l'intermédiaire de la première connexion de communication (Uu) sont reçus dans la sous-couche MAC ou dans un canal physique de commande.

10. Second appareil de communication (RX1, RX2, RX3) configuré pour établir, maintenir et interrompre une première connexion de communication sans fil (Uu) avec une station de base (gNB) d'un réseau d'accès radio, et configuré en outre pour établir, maintenir et interrompre des secondes connexions de communication sans fil directes (PC5) avec un premier appareil de communication (TX), dans lequel le second appareil de communication (RX1, RX2, RX3) est en outre configuré pour recevoir, par l'intermédiaire de la seconde connexion de communication (PC5), des informations de commande permettant de planifier le fonctionnement de composants électroniques, nécessaires à la réception de transmissions sans fil par l'intermédiaire de la seconde connexion de communication (PC5), dans un premier ou un second mode de fonctionnement, respectivement, dans lequel, dans le premier mode de fonctionnement, les composants électroniques du second appareil de communication (RX1, RX2, RX3) sont sous tension et servent à recevoir des transmissions sans fil et dans lequel, dans le second mode de fonctionnement, les composants électroniques du second appareil de communication (RX1, RX2, RX3) ne sont pas sous tension ou sont placés dans un mode basse consommation et ne servent pas à recevoir des transmissions sans fil par l'intermédiaire de la seconde connexion de communication (PC5),
**caractérisé en ce que** le second appareil de communication (RX1, RX2, RX3) est en outre configuré pour recevoir, par l'intermédiaire de la première connexion de communication (Uu), et en provenance d'une station de base (gNB) du réseau d'accès radio, des éléments d'informations de commande pour la planification du fonctionnement des composants électroniques, nécessaires à la réception des transmissions sans fil par l'intermédiaire de la seconde connexion de communication (PC5), dans le premier ou le second mode de fonctionnement, respectivement, et pour remplacer les éléments d'informations de commande reçus précédemment par l'intermédiaire de la seconde connexion de communication (PC5) par les éléments d'informations de commande reçus par l'intermédiaire de la première connexion de communication (Uu).

11. Second appareil de communication (Rx1, RX2, RX3) selon la revendication 10, configuré en outre pour activer et désactiver, respectivement, les porteuses individuelles utilisées pour une communication par l'intermédiaire de la seconde connexion de communication (PC5), en réponse aux éléments d'informations de commande reçus.

12. Procédé (300) de fonctionnement d'une station de base (gNB) d'un réseau d'accès radio, la station de base (gNB) étant configurée pour établir, maintenir et interrompre une première connexion de communication sans fil (Uu) avec un ou plusieurs premier et seconds appareils de communication (TX, RX1, RX2, RX3) selon l'une quelconque ou plusieurs revendications parmi les revendications 5 à 7 ou 10 à 11, respectivement,
**caractérisé en ce que** le procédé consiste à :
- recevoir (304), par l'intermédiaire de la première connexion de communication (Uu) et en provenance d'un premier appareil de communication (TX), une indication représentant un élément d'informations selon lequel une seconde connexion de communication entre le premier appareil de communication (TX) et un ou plusieurs seconds appareils de communication (RX1, RX2, RX3) est compromise ou perdue, et
- transmettre (306), par l'intermédiaire de la première connexion de communication (Uu), et à un ou plusieurs seconds appareils de communication (RX1, RX2, RX3), des éléments d'informations de commande pour la planification ou la modification du fonctionnement des composants électroniques, nécessaires à la réception des transmissions sans fil en provenance du premier appareil de communication (TX) par l'intermédiaire de la seconde connexion de communication (PC5), dans les premier et second modes de fonctionnement, respectivement.

13. Procédé (300) selon la revendication 12, comprenant en outre l'établissement et le maintien (302) d'une correspondance entre les identifiants utilisés dans le premier et les seconds appareils de communication (TX, RX1, RX2, RX3) pour une communication par l'intermédiaire de la première connexion de communication (Uu) et les identifiants utilisés dans le premier et les seconds appareils de communication (TX, RX1, RX2, RX3) pour une communication par l'intermédiaire de la seconde connexion de communication (PC5).

14. Procédé (300) selon la revendication 12 ou 13, dans lequel les éléments d'informations de commande comprennent une identification d'une ou plusieurs porteuses dans la seconde connexion de communication (PC5), qui doivent être activées ou désactivées.

15. Station de base (gNB) d'un réseau d'accès radio comprenant un ou plusieurs microprocesseurs (502), une mémoire volatile et non volatile (504, 506) et des moyens de réception et de transmission (508), qui sont connectés en communication par l'intermédiaire d'au moins une connexion ou un bus de données (512), dans laquelle la mémoire non volatile (506) comprend des instructions de programme d'ordinateur qui, lorsqu'elles sont exécutées par le ou les microprocesseurs (502), commandent aux moyens de réception et de transmission (508) d'établir, maintenir et interrompre des premières connexions de communication (Uu) avec un ou plusieurs premier et seconds appareils de communication (TX, RX1, RX2, RX3) selon une ou plusieurs des revendications 5 à 7 et 10 à 11, respectivement, dans laquelle la mémoire non volatile (506) stocke en outre des instructions de programme informatique qui, lorsqu'elles sont exécutées par le ou les microprocesseurs (502), configurent la station de base (gNB) pour mettre en œuvre et exécuter le procédé selon l'une des revendications 12 à 14.

16. Station de base (gNB) selon la revendication 15, dans laquelle la station de base (gNB) est configurée pour établir, maintenir et interrompre une première connexion de communication sans fil (Uu) conformément aux normes 3GPP 5G et/ou 6G.

17. Procédé d'autorisation d'une communication entre un premier appareil de communication (TX) selon une ou plusieurs des revendications 5 à 7 et un ou plusieurs seconds appareils de communication (RX1, RX2, RX3) selon une ou plusieurs des revendications 10 à 11, par l'intermédiaire d'une seconde connexion de communication (PC5), dans lequel le premier appareil de communication (TX) et le ou les seconds appareils de communication (RX1, RX2, RX3) sont en outre configurés pour communiquer avec une station de base (gNB) d'un réseau d'accès radio par l'intermédiaire d'une première connexion de communication, le procédé comprenant :
- la détermination (104), par le premier appareil de communication (TX), si un ou plusieurs seconds appareils de communication (RX1, RX2, RX3) n'ont pas reçu un ou plusieurs éléments d'informations de commande précédemment transmis (102) par l'intermédiaire de la seconde connexion de communication (PC5) et, dans le cas positif, la transmission (106) d'une indication correspondante, par l'intermédiaire de la première connexion de communication (Uu), à la station de base (gNB) du réseau d'accès radio,
- la réception (304), par la station de base (gNB), par l'intermédiaire de la première connexion de communication (Uu), et en provenance du premier appareil de communication (TX), de l'indication représentant un élément d'informations selon lequel une seconde connexion de communication entre le premier appareil de communication (TX) et un ou plusieurs seconds appareils de communication (RX1, RX2, RX3) est compromise ou perdue, et la transmission (306), par l'intermédiaire de la première connexion de communication (Uu) et à un ou plusieurs seconds appareils de communication (RX1, RX2, RX3), des éléments d'informations de commande pour la planification ou la modification du fonctionnement des composants électroniques, nécessaires à la réception des transmissions sans fil en provenance du premier appareil de communication (TX) par l'intermédiaire de la seconde connexion de communication (PC5), dans les premier et second modes de fonctionnement, respectivement, et
- la réception (202), par le ou les seconds appareils de communication (RX1, RX2, RX3), par l'intermédiaire de la première connexion de communication (Uu), et en provenance de la station de base (gNB) du réseau d'accès radio, des éléments d'informations de commande pour la planification ou la modification du fonctionnement des composants électroniques, nécessaires à la réception des transmissions sans fil par l'intermédiaire de la seconde connexion de communication (PC5), dans le premier ou le second mode de fonctionnement, respectivement, et l'application (204) des éléments d'informations de commande reçus par l'intermédiaire de la première connexion de communication (Uu), pour le fonctionnement des composants électroniques, nécessaires à la réception des transmissions sans fil par l'intermédiaire de la seconde connexion de communication PC5, dans un mode de fonctionnement approprié, dans lequel les éléments d'informations de commande reçus par l'intermédiaire de la première connexion de communication (Uu) remplacent les éléments d'informations de commande précédemment reçus par l'intermédiaire de la seconde connexion de communication (PC5).

18. Produit programme d'ordinateur comprenant des instructions de programme d'ordinateur qui, lorsqu'elles sont exécutées par un microprocesseur, amènent le microprocesseur et/ou les composants de matériels de commande d'un premier appareil de communication (TX) selon l'une des revendications 5 à 7, d'un second appareil de communication (RX1, RX2, RX3) selon l'une des revendications 10 à 11, ou d'une station de base (gNB) selon l'une des revendications 15 à 16, respectivement, à exécuter le procédé (100, 200, 300) selon une ou plusieurs des revendications 1 à 4, 8 à 9 ou 12 à 14, respectivement.

19. Support lisible par ordinateur stockant le produit programme d'ordinateur selon la revendication 18.

20. Véhicule ou unité installée au bord de la route comprenant un dispositif de communication (TX, RX) configuré pour exécuter le procédé selon une ou plusieurs des revendications 1 à 4 et/ou configuré pour exécuter le procédé selon une ou plusieurs des revendications 8 à 9.
